(19) Europäisches Patentamt
European Patent Office
Office européen des brevets

(11) **EP 2 566 074 B1**

(12) **EUROPEAN PATENT SPECIFICATION**

(45) Date of publication and mention
of the grant of the patent:
**14.02.2018 Bulletin 2018/07**

(51) Int Cl.:
**H04B 17/00** (2015.01)       **H04B 17/336** (2015.01)
**H04B 17/373** (2015.01)

(21) Application number: **11777130.3**

(86) International application number:
**PCT/CN2011/072745**

(22) Date of filing: **13.04.2011**

(87) International publication number:
**WO 2011/137709 (10.11.2011 Gazette 2011/45)**

(54) **METHOD AND DEVICE FOR PREDICTING SIGNAL TO INTERFERENCE AND NOISE RATIO**

VERFAHREN UND VORRICHTUNG ZUR VORHERSAGE EINES SIGNAL/INTERFERENZ- BZW.
SIGNAL/RAUSCH-VERHÄLTNISSES

PROCÉDÉ ET DISPOSITIF DE PRÉVISION DU RAPPORT SIGNAL SUR INTERFÉRENCE ET BRUIT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.05.2010 CN 201010165774**

(43) Date of publication of application:
**06.03.2013 Bulletin 2013/10**

(73) Proprietor: **ZTE Corporation
Shenzhen, Guangdong 518057 (CN)**

(72) Inventors:
• **ZHANG, Qinghong
Shenzhen
Guangdong 518057 (CN)**
• **WANG, Yanwen
Shenzhen
Guangdong 518057 (CN)**

(74) Representative: **Awapatent AB
P.O. Box 11394
404 28 Göteborg (SE)**

(56) References cited:
**EP-A1- 2 031 790          CN-A- 101 237 659
CN-A- 101 588 590          US-A1- 2008 039 098
US-A1- 2009 238 086        US-A1- 2009 318 090**

**Description**

**TECHNICAL FIELD**

The disclosure relates to the technology field of predicting Signal to Interference plus Noise Ratio (SINR), in particular to a method and device for predicting SINR based on the SINR of a Reference Signal (RS) transmitted previously.

**BACKGROUND**

The core of radio communication is to predict quality of a channel; an accurate prediction result of channel quality is the basis of reliable and efficient transmission in the radio communication. The characteristic of time selective fading and frequency selective fading of a radio channel causes randomness to exist in the change of the radio channel in both time domain and frequency domain, thus the prediction of the radio channel becomes very difficult and complex.

In present application, a radio communication system generally needs to obtain the characteristic of time selective fading and frequency selective fading of a radio channel by transmitting an RS, so as to make a latest channel quality result based on an RS or a filtering result thereof the prediction result of the quality of the radio channel. In order to save precious radio communication resources in the radio communication system, the RS generally does not appear intensively in both time domain and frequency domain, that is, the radio communication system cannot obtain the real-time channel quality on all spectrums of the radio channel through a measurement result of an RS, thus the prediction result of the channel is difficult to be guaranteed, and the reliability and the efficiency of the radio communication are impacted.

US 2009/0318090 A1 discloses methods and apparatus in a mobile receiver for selecting among methods of estimating a received power of at least one signal. A method includes selecting a first method or a second method of measuring the received power based on a cell timing and a measurement interval. Information is received from a first base station about the measurement interval during which to perform the first method and the second method on a signal transmitted by at least one second base station. The timing of the at least one second base station is determined, and based on the timing of the at least one second base station and the measurement interval, one of the first method and the second method is selected.

**SUMMARY**

In view of the problem above, the main object of the disclosure is to provide a method and device for predicting SINR, which can predict the SINR of a channel to be estimated according to the SINR of an RS transmitted previously in a radio communication system.

In order to achieve the object above, the technical solution of the disclosure is realized as follows.

The disclosure provides a method for predicting SINR, the method includes: setting a time domain threshold and a frequency domain threshold, dividing a time-frequency distance space into different regions according to the set time domain threshold and frequency domain threshold, and setting an SINR determination manner for each time-frequency region;

the method further includes:

calculating a time domain difference and a frequency domain difference between a channel to be estimated and a referenced Reference Signal (RS); wherein the RS is previously transmitted closest to the channel to be estimated in time domain;

determining a time-frequency region to which the time domain difference and the frequency domain difference belong; and

determining the SINR of the channel to be estimated according to the SINR determination manner corresponding to the time-frequency region to which the time domain difference and the frequency domain difference belong.

Preferably, the step of calculating a time domain difference and a frequency domain difference between a channel to be estimated and a referenced RS may include:

when both the time-frequency regions in which the channel to be estimated and the referenced RS locate are a preset time-frequency unit, calculating the time domain difference and the frequency domain difference according to time-frequency coordinate of the channel to be estimated and/or the referenced RS;

when the time-frequency region in which the channel to be estimated locates and/or the time-frequency region in which the referenced RS locates are/is greater than a preset time-frequency unit, calculating an average value of a time-domain coordinate and a frequency-domain coordinate of the channel to be estimated and/or the referenced RS according to the time-frequency unit, making the average coordinate value as the coordinate of the channel to be estimated and/or the referenced RS and calculating the time domain difference and the frequency domain difference according to the coordinate of the channel to be estimated and/or the referenced RS.

Preferably, the step of dividing a time-frequency distance space into different regions according to the set time domain threshold and frequency domain threshold may include:

when the number of the set time domain threshold is m and the number of the set frequency domain threshold is n, dividing the time-frequency distance space into (m+1)(n+1) time-frequency regions, which include a region between 0 and the first threshold, a region between the first threshold and the second threshold, ..., a region between the (m-1)th threshold and the mth threshold, a region between the (n-1)th threshold and the nth threshold, a region beyond the mth threshold and the nth threshold, wherein both m and n are integers no smaller than 0, and are not equal to 0 simultaneously.

Preferably, Bxy may be used for representing a divided time-frequency region, x represents a region sequence number in time domain and y represents a region sequence number in frequency domain, in which, x is not less than 1 but not greater than (m+1), y is not less than 1 but not greater than (n+1);
in the disclosure, in consideration of difference between transmit power spectral densities of each referenced RS and the channel to be estimated, during the actual SINR prediction process, the difference between the transmit power spectral densities of each referenced RS and the channel to be estimated would be compensated, so that the SINR prediction operation is performed on the basis of equal transmit power spectral density. Without loss of generality, in the following content of the method and the system in the disclosure, it is assumed that the transmit power spectral densities of all referenced RSs and the channel to be estimated are the same (if difference exists, the difference between the transmit power spectral densities of the channel to be estimated and each referenced RS can be added to the SINR measurement value of each referenced RS, and then the technical solution of the disclosure can be adopted).
the step of setting an SINR determination manner for each time-frequency region may include:

for B11, the SINR of the channel to be estimated being equal to that of the referenced RS;

for B21, the SINR of the channel to be estimated being: SINR1+[(SINR1-SINR2)/(T1-T2)](T0-T1), where SINR1 represents the SINR of an RS closest to the channel to be estimated in time domain; SINR2 represents the SINR of an RS second-closest to the channel to be estimated in time domain; T1 represents the time-domain coordinate of the RS closest to the channel to be estimated in time domain; T2 represents the time-domain coordinate of the RS second-closest to the channel to be estimated in time domain; and T0 represents the time-domain coordinate of the channel to be estimated;

for B31, B41, ..., Bm1, and B(m+1)1, determining the SINR of the channel to be estimated according to an inverse function of a probability-distribution function of the SINR of all referenced RSs; and

for B12, the SINR of the channel to be estimated being: SINR1+[(SINR1-SINR2)/(F1-F2)](F0-F1), where SINR1 represents the SINR of an RS closest to the channel to be estimated in time domain; SINR2 represents the SINR of an RS second-closest to the channel to be estimated in time domain; F1 represents the frequency-domain coordinate of the RS closest to the channel to be estimated in time domain; F2 represents the frequency-domain coordinate of the RS second-closest to the channel to be estimated in time domain; and F0 represents the frequency-domain coordinate of the channel to be estimated;

for B13, B14, ..., B1n, and B1(n+1), determining the SINR of the channel to be estimated according to an inverse function of a probability-distribution function of the SINR of all referenced RSs;

for Bxy, in the condition of x being greater than 1 and y being greater than 1, the SINR determination function of the channel to be estimated being: y·Fx1()/(x+y)+x·F1y()/(x+y), where Fx1() represents the SINR determination function of region Bx1, and F1y() represents the SINR determination function of region B1y; wherein for the region with x no small than 2 and y no smaller than 2, determining the SINR of the channel to be estimated according to an inverse function of a probability-distribution function of the SINR of all referenced RSs;

or, the step of setting an SINR determination manner for each time-frequency region may include:

for B11, the SINR of the channel to be estimated being equal to that of the referenced RS;

for B21, the SINR of the channel to be estimated being: SINR1+[(SINR1-SINR2)/(T1-T2)](T0-T1), where SINR1 represents the SINR of an RS closest to the channel to be estimated in time domain; SINR2 represents the SINR of an RS second-closest to the channel to be estimated in time domain; T1 represents the time-domain coordinate of the RS closest to the channel to be estimated in time domain; T2 represents the time-domain coordinate of the RS second-closest to the channel to be estimated in time domain; and T0 represents the time-domain coordinate of the channel to be estimated;

for B31, B41, ..., Bm1, and B(m+1)1, determining the SINR of the channel to be estimated according to an inverse function of a probability-distribution function of the SINR of all referenced RSs;

for B12, the SINR of the channel to be estimated being: SINR1+[(SINR1-SINR2)/(F1-F2)](F0-F1), where SINR1 represents the SINR of an RS closest to the channel to be estimated in time domain; SINR2 represents the SINR of an RS second-closest to the channel to be estimated in time domain; F1 represents the frequency-domain coordinate of the RS closest to the channel to be estimated in time domain; F2 represents the frequency-domain coordinate of the RS second-closest to the channel to be estimated in time domain; and F0 represents the frequency-domain coordinate of the channel to be estimated;

for B13, B14, ..., Bn1, and B1(n+1), determining the SINR of the channel to be estimated according to an inverse function of a probability-distribution function of the SINR of all referenced RSs; and

for Bxy, in the condition of x being greater than 1 and y being greater than 1, the SINR determination function of the channel to be estimated being: y·Fx1()/(x+y)+x·F1y()/(x+y), where Fx1() represents the SINR determination function of region Bx1, and F1y() represents the SINR determination function of region B1y.

Preferably, for B21, the SINR of the channel to be estimated further being: $SINR1+[(SINR1-SINR2)/(T1^2-T2^2)](T0^2-T1^2)$ or $SINR1+[(SINR1-SINR2)/\sqrt{T1^2-T2^2}]\times\sqrt{T0^2-T1^2}$, where SINR1 represents the SINR of an RS closest to the channel to be estimated in time domain; SINR2 represents the SINR of an RS second-closest to the channel to be estimated in time domain; T1 represents the time-domain coordinate of the RS closest to the channel to be estimated in time domain; T2 represents the time-domain coordinate of the RS second-closest to the channel to be estimated in time domain; and T0 represents the time-domain coordinate of the channel to be estimated; wherein T0>T1>T2;

for B12, the SINR of the channel to be estimated further being: $SINR1+[(SINR1-SINR2)/(F1^2-F2^2)](F0^2-F1^2)$ or $SINR1+[(SINR1-SINR2)/\sqrt{F1^2-F2^2}]\sqrt{F0^2-F1^2}$, where SINR1 represents the SINR of an RS closest to the channel to be estimated in time domain; SINR2 represents the SINR of an RS second-closest to the channel to be estimated in time domain; F1 represents the frequency-domain coordinate of the RS closest to the channel to be estimated in time domain; F2 represents the frequency-domain coordinate of the RS second-closest to the channel to be estimated in time domain; and F0 represents the frequency-domain coordinate of the channel to be estimated; wherein F0>F1>F2.

Preferably, m may be 1, 2, 3 or 4, wherein n may be 1, 2 or 3.

The disclosure also provides a device for predicting SINR, the device includes a setting unit, a calculation unit and a determination unit, wherein

the setting unit is configured to set a time domain threshold and a frequency domain threshold, divide a time-frequency distance space into different regions according to the set time domain threshold and frequency domain threshold, and set an SINR determination manner for each time-frequency region;

the calculation unit is configured to calculate a time domain difference and a frequency domain difference between a channel to be estimated and a referenced Reference Signal (RS); wherein the RS is previously transmitted closest to the channel to be estimated in time domain; and

the determination unit is configured to determine a time-frequency region to which the time domain difference and the frequency domain difference belong, and determine the SINR of the channel to be estimated according to the SINR determination manner corresponding to the time-frequency region to which the time domain difference and the frequency domain difference belong.

Preferably, the calculation unit may be further configured to:

when both the time-frequency regions in which the channel to be estimated and the referenced RS locate are a preset time-frequency unit, calculate the time domain difference and the frequency domain difference according to time-frequency coordinate of the channel to be estimated and/or the referenced RS;

when the time-frequency region in which the channel to be estimated locates and/or the time-frequency region in which the referenced RS locates are/is greater than a preset time-frequency unit, calculate an average value of a time-domain coordinate and a frequency-domain coordinate of the channel to be estimated and/or the referenced RS according to the time-frequency unit, make the average coordinate value as the coordinate of the channel to be estimated and/or the referenced RS, and calculate the time domain difference and the frequency domain difference according to the coordinate of the channel to be estimated and/or the referenced RS.

Preferably, the setting unit may be further configured to:

when the number of the set time domain threshold is m and the number of the set frequency domain threshold is n, divide the time-frequency distance space into $(m+1)(n+1)$ regions, which include a region between 0 and the first threshold, a region between the first threshold and the second threshold, ..., a region between the $(m-1)$th threshold and the mth threshold, a region between the $(n-1)$th threshold and the nth threshold, a region beyond the mth threshold and the nth threshold, wherein both m and n are integers no smaller than 0, and are not equal to 0 simultaneously.

Preferably, Bxy may be used for representing a divided time-frequency region, x represents a region order in time domain and y represents a region order in frequency domain, in which, x is not less than 1 but not greater than $(m+1)$, y is not less than 1 but not greater than $(n+1)$;
the determination unit may be further configured to determine that:

for B11, the SINR of the channel to be estimated is equal to that of the referenced RS;

for B21, the SINR of the channel to be estimated is: $SINR1+[(SINR1-SINR2)/(T1-T2)](T0-T1)$, where SINR1 represents the SINR of an RS closest to the channel to be estimated in time domain; SINR2 represents the SINR of an RS second-closest to the channel to be estimated in time domain; T1 represents the time-domain coordinate of the RS closest to the channel to be estimated in time domain; T2 represents the time-domain coordinate of the RS second-closest to the channel to be estimated in time domain; and T0 represents the time-domain coordinate of the channel to be estimated;

for B31, B41, ..., Bm1, and B(m+1)1, the SINR of the channel to be estimated is determined according to an inverse function of a probability-distribution function of the SINR of all referenced RSs; and

for B12, the SINR of the channel to be estimated being: $SINR1+[(SINR1-SINR2)/(F1-F2)](F0-F1)$, where SINR1 represents the SINR of an RS closest to the channel to be estimated in time domain; SINR2 represents the SINR of an RS second-closest to the channel to be estimated in time domain; F1 represents the frequency-domain coordinate of the RS closest to the channel to be estimated in time domain; F2 represents the frequency-domain coordinate of the RS second-closest to the channel to be estimated in time domain; and F0 represents the frequency-domain coordinate of the channel to be estimated;

for B13, B14, ..., B1n, and B1(n+1), determining the SINR of the channel to be estimated according to an inverse function of a probability-distribution function of the SINR of all referenced RSs;

for Bxy, in the condition of x being greater than 1 and y being greater than 1, the SINR determination function of the channel to be estimated being: $y \cdot Fx1()/(x+y)+x \cdot F1y()/(x+y)$, where Fx1() represents the SINR determination function of region Bx1, and F1y() represents the SINR determination function of region B1y; wherein for the region with x no small than 2 and y no smaller than 2, the SINR of the channel to be estimated is determined according to an inverse function of a probability-distribution function of the SINR of all referenced RSs;

or, the determination unit may be further configured to determine that:

for B11, the SINR of the channel to be estimated is equal to that of the referenced RS;

for B21, the SINR of the channel to be estimated is: $SINR1+[(SINR1-SINR2)/(T1-T2)](T0-T1)$, where SINR1 represents the SINR of an RS closest to the channel to be estimated in time domain; SINR2 represents the SINR of an RS second-closest to the channel to be estimated in time domain; T1 represents the time-domain coordinate of the RS closest to the channel to be estimated in time domain; T2 represents the time-domain coordinate of the RS second-closest to the channel to be estimated in time domain; and T0 represents the time-domain coordinate of the channel to be estimated;

for B31, B41, ..., Bm1, and B(m+1)1, the SINR of the channel to be estimated is determined according to an inverse function of a probability-distribution function of the SINR of all referenced RSs;

for B12, the SINR of the channel to be estimated is: SINR1+[(SINR1-SINR2)/(F1-F2)](F0-F1), where SINR1 represents the SINR of an RS closest to the channel to be estimated in time domain; SINR2 represents the SINR of an RS second-closest to the channel to be estimated in time domain; F1 represents the frequency-domain coordinate of the RS closest to the channel to be estimated in time domain; F2 represents the frequency-domain coordinate of the RS second-closest to the channel to be estimated in time domain; and F0 represents the frequency-domain coordinate of the channel to be estimated;

for B13, B14, ..., Bn1, and B1(n+1), the SINR of the channel to be estimated is determined according to an inverse function of a probability-distribution function of the SINR of all referenced RSs; and

for Bxy, in the condition of x being greater than 1 and y being greater than 1, the SINR determination function of the channel to be estimated is: $y \cdot Fx1()/(x+y)+x \cdot F1y()/(x+y)$, where Fx1() represents the SINR determination function of region Bx1, and F1y() represents the SINR determination function of region B1y.

Preferably, for B21, the SINR of the channel to be estimated is: $\text{SINR1}+[(\text{SINR1-SINR2})/(T1^2-T2^2)](T0^2-T1^2)$ or $\text{SINR1}+[(\text{SINR1-SINR2})/\sqrt{T1^2-T2^2}] \times \sqrt{T0^2-T1^2}$, where SINR1 represents the SINR of an RS closest to the channel to be estimated in time domain; SINR2 represents the SINR of an RS second-closest to the channel to be estimated in time domain; T1 represents the time-domain coordinate of the RS closest to the channel to be estimated in time domain; T2 represents the time-domain coordinate of the RS second-closest to the channel to be estimated in time domain; and T0 represents the time-domain coordinate of the channel to be estimated; wherein T0>T1>T2;

for B12, the SINR of the channel to be estimated is: $\text{SINR1}+[(\text{SINR1-SINR2})/(F1^2-F2^2)](F0^2-F1^2)$ or $\text{SINR1}+[(\text{SINR1-SINR2})/\sqrt{F1^2-F2^2}]\sqrt{F0^2-F1^2}$, where SINR1 represents the SINR of an RS closest to the channel to be estimated in time domain; SINR2 represents the SINR of an RS second-closest to the channel to be estimated in time domain; F1 represents the frequency-domain coordinate of the RS closest to the channel to be estimated in time domain; F2 represents the frequency-domain coordinate of the RS second-closest to the channel to be estimated in time domain; and F0 represents the frequency-domain coordinate of the channel to be estimated; wherein F0> F1>F2.

Preferably, m may be 1, 2, 3 or 4, wherein n may be 1, 2 or 3.

In the disclosure, thresholds corresponding to a time domain and a frequency domain are set in advance, a time-frequency distance space is divided into a plurality of regions according to the set thresholds, and a corresponding SINR determination manner is set for each region; when the SINR of a channel to be estimated is predicted, a time domain difference and a frequency domain difference between time-frequency coordinates of a channel to be estimated and a referenced RS are determined first, a region to which the time domain difference and the frequency domain difference belong is determined, and then the SINR of the channel to be estimated is determined according to the SINR determination manner corresponding to the region to which the time domain difference and the frequency domain difference belong; in the disclosure, the relevant fading characteristics of an RS in time domain and frequency domain are fully considered, the SINR of the channel to be estimated is predicted combining the SINR feature of the RS that was transmitted previously by the system, and the prediction result is more accurate.

## BRIEF DESCRIPTION OF THE DRAWINGS

Fig. 1 shows a flowchart of a method for predicting SINR according to the disclosure;

Fig. 2 shows a schematic diagram of time-frequency regions divided according to a time domain threshold and a frequency domain threshold in the disclosure;

Fig. 3 shows a schematic diagram of a channel to be estimated and a referenced RS;

Fig. 4 shows a structural diagram of a device for predicting SINR in the disclosure.

**DETAILED DESCRIPTION**

The basic principle of the disclosure is that: thresholds corresponding to a time domain and a frequency domain are set in advance, a time-frequency distance space is divided into a plurality of regions according to the set thresholds and a corresponding SINR determination manner is set for each region; when the SINR of a channel to be estimated is predicted, a time domain difference and a frequency domain difference between time-frequency coordinates of a channel to be estimated and a referenced RS are determined first, a region to which the time domain difference and the frequency domain difference belong is determined, and then the SINR of the channel to be estimated is determined according to the SINR determination manner corresponding to the region to which the time domain difference and the frequency domain difference belong.

For a better understanding of the purpose, technical solution and advantages of the disclosure, embodiments are provided below to further illustrate the disclosure in detail by reference to accompanying drawings.

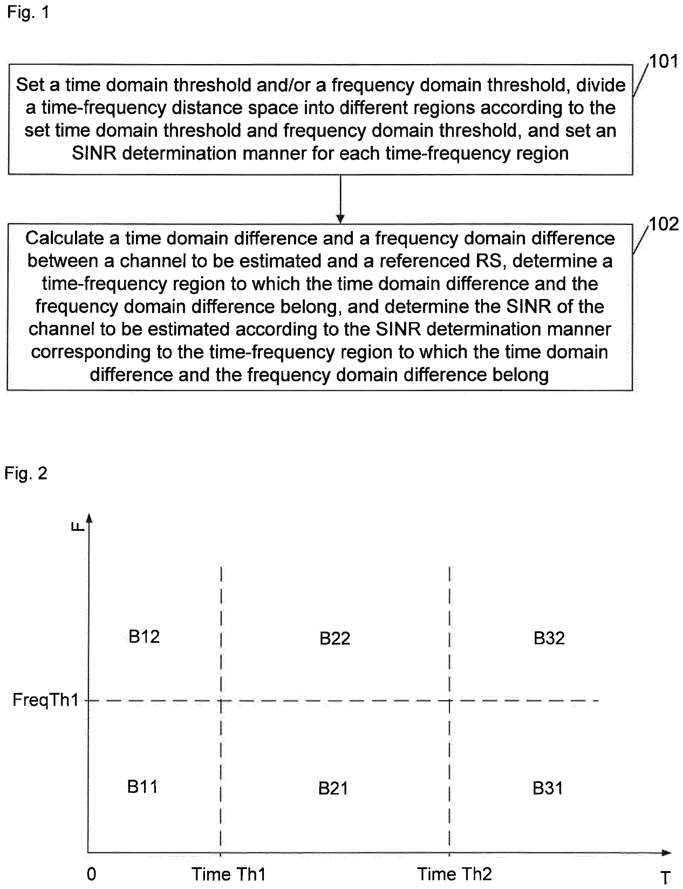

Fig. 1 shows a flowchart of a method for predicting SINR according to the disclosure; as shown in Fig. 1, the method for predicting SINR according to the disclosure includes the following steps.

Step 101: set a time domain threshold and/or a frequency domain threshold, divide a time-frequency distance space into different regions according to the set time domain threshold and frequency domain threshold, and set an SINR determination manner for each time-frequency region.

Specifically, the specific value of the time domain threshold and/or the frequency domain threshold above is correlated to the frequency selective/time selective fading of a radio channel; when the frequency selective/time selective characteristic is stronger, the frequency domain/time domain threshold is smaller; otherwise, the frequency domain/time domain threshold is greater. Specifically, the threshold can be set according to a relevant simulation system, or set according to the requirement of the system on the SINR prediction precision, for example, the time domain threshold can be set as 0.5ms, 0.1 ms, 1ms, 2ms, 5ms, 10ms, 50ms, a subframe, an Orthogonal Frequency Division Multiplexing (OFDM) symbol in a subframe, etc.; the frequency domain threshold can be set as 12 subcarriers, 24 subcarriers. 36 subcarriers, 1 MHz, 5MHz, 10MHz, etc.; the purpose of setting the time domain threshold and/or the frequency domain threshold is to better define the relevance between an RS and a channel to be estimated, so as to determine the SINR of a channel to be estimated through a referenced RS.

Step 102: calculate a time domain difference and a frequency domain difference between a channel to be estimated and a referenced RS, determine a time-frequency region to which the time domain difference and the frequency domain difference belong, and determine the SINR of the channel to be estimated according to the SINR determination manner corresponding to the time-frequency region to which the time domain difference and the frequency domain difference belong.

The step of calculating a time domain difference and a frequency domain difference between a channel to be estimated and a referenced RS specifically includes the steps of: when both the time-frequency regions in which the channel to be estimated and the referenced RS locate are a preset time-frequency unit, calculating the time domain difference and the frequency domain difference according to time-frequency coordinate(s) of the channel to be estimated and/or the referenced RS; when the time-frequency region in which the channel to be estimated locates and/or the time-frequency region in which the referenced RS locates are/is greater than a preset time-frequency unit, calculating an average value of a time-domain coordinate and/or a frequency-domain coordinate of the channel to be estimated and/or the referenced RS according to the time-frequency unit, making the average coordinate value the coordinate of the channel to be estimated and/or the referenced RS and calculating the time domain difference and the frequency domain difference according to the coordinate of the channel to be estimated and/or the referenced RS.

When the set time domain threshold is m and the set frequency domain threshold is n, the time-frequency distance space can be divided into (m+1)(n+1) regions, which includes a region between 0 and the first threshold, a region between the first threshold and the second threshold,..., a region between the (m-1)th threshold and the mth threshold, a region between the (n-1)th threshold and the nth threshold, a region beyond the mth threshold and the nth threshold, wherein both m and n are integers no smaller than n, and are not equal to 0 simultaneously. If Bxy is used for representing a divided time-frequency region, x represents a region order in time domain and y represents a region order in frequency domain, in which, x is not less than 1 but not greater than (m+1), y is not less than 1 but not greater than (n+1); for B11, the SINR of the channel to be estimated is equal to that of the referenced RS; for B21, the SINR of the channel to be estimated is: SINR1+[(SINR1-SINR2)/(T1-T2)](T0-T1), where SINR2 represents the SINR of a referenced RS, SINR1 represents the SINR of a first referenced RS, T2 represents the time-domain coordinate of a second referenced RS, T1 represents the time-domain coordinate of the first referenced RS, and T0 represents the time-domain coordinate of the channel to be estimated; in the disclosure, the first referenced RS is the RS closest to the channel to be estimated in time domain, and the second referenced RS is the RS second-closest to the channel to be estimated in time domain; for B31, B41, ..., Bm1, and B(m+1)1, the SINR of the channel to be estimated is determined according to an inverse function of a probability-distribution function (the probability-distribution function represents the probability of a random variable being less than an independent variable X) of the SINR of all referenced RSs; for B12, the SINR of the channel to be estimated is: SINR1+[(SINR1-SINR2)/(F1-F2)](F0-F1), where SINR2 represents the SINR of a referenced RS, SINR1 represents the SINR of a first referenced RS, F2 represents the frequency-domain coordinate of a second referenced RS, F1 represents the frequency-domain coordinate of the first referenced RS, and F0 represents the frequency-domain coordinate of the channel to be estimated; for B13, B14... Bn1, and B1(n+1), the SINR of the channel to be estimated is determined according to an inverse function of a probability-distribution function of the SINR of all referenced RSs; for Bxy, in the condition of x being greater than 1 and y being greater than 1, the SINR determination function of the channel to be estimated: $y \cdot Fx1()/(x+y)+x \cdot F1y()/(x+y)$, where Fx1() represents the SINR determination function of region Bx1, F1y() represents the SINR determination function of region B1y.

Of course, in the condition of x being greater than 2 and y being greater than 2, the SINR of the channel to be estimated also can be determined according to an inverse function of a probability-distribution function of the SINR of all referenced RSs.

For the B21 above, the SINR determination manner of the channel to be estimated also can be: SINR1+[(SINR1-SINR2)/(T1$^2$-T2$^2$)](T0$^2$-T1$^2$), where SINR2 represents the SINR of a referenced RS, SINR1 represents the SINR of a first referenced RS, T2 represents the time-domain coordinate of a second referenced RS, T1 represents the time-domain coordinate of the first referenced RS, and T0 represents the time-domain coordinate of the channel to be estimated; the SINR determination manner of the channel to be estimated also can be:

$$SINR1+[(SINR1-SINR2)/\sqrt{T1^2-T2^2}] \times \sqrt{T0^2-T1^2}$$

, where SINR2 represents the SINR of a referenced RS, SINR1 represents the SINR of a first referenced RS, T2 represents the time-domain coordinate of a second referenced RS, T1 represents the time-domain coordinate of the first referenced RS, and T0 represents the time-domain coordinate of the channel to be estimated, wherein T0>T1>T2.

For the B12 above, the SINR determination manner of the channel to be estimated also can be: SINR1+[(SINR1-SINR2)/(F1$^2$-F2$^2$)](F0$^2$-F1$^2$), where SINR2 represents the SINR of a referenced RS, SINR1 represents the SINR of a first referenced RS, F2 represents the time-domain coordinate of a second referenced RS, F1 represents the time-domain coordinate of the first referenced RS, and F0 represents the time-domain coordinate of the channel to be estimated. The SINR determination manner of the channel to be estimated also can be:

$$SINR1+[(SINR1-SINR2)/\sqrt{F1^2-F2^2}]\sqrt{F0^2-F1^2}$$

, where SINR2 represents the SINR of a referenced RS, SINR1 represents the SINR of a first referenced RS, T2 represents the time-domain coordinate of a second referenced RS, F1 represents the time-domain coordinate of the first referenced RS, and F0 represents the time-domain coordinate of the channel to be estimated, wherein F0>F1>F2.

Specifically, when the number of the referenced RS above is one, preferably, the referenced RS is the RS transmitted closest to the channel to be estimated in time domain; when the number of the referenced RSs is two, the first referenced RS is the RS transmitted closest to the channel to be estimated in time domain, and the second referenced RS is the RS transmitted second-closest to the channel to be estimated in time domain; when the number of the referenced RSs is no less than three, a same number of RSs closest to the channel to be estimated in time domain are selected in turn as corresponding referenced RSs.

Specifically, m is preferably 1 or 2, correspondingly, n is preferably 1 or 2. Of course, m also can be 3 or 4 or other values, n also can be 3 or other values, wherein in consideration of implementation complexity, the value of m and n should not be too great.

The essence of the technical solution of the disclosure is further illustrated below in detail by a specific example.

Two time domain thresholds are set: TimeTh1, TimeTh2, and 0<TimeTh1 <TimeTh2;

One frequency domain threshold is set: FreqTh1, and 0<FreqTh1;

As shown in Fig. 2, the two time domain thresholds and the one frequency domain threshold above divide a time-frequency distance space into 6 regions, which are respectively represented by Bxy, where x is in a range of {1, 2, 3}, y is in a range of {1, 2}; the six regions above are respectively represented by B11, B21, B31, B21, B22, B23; as shown in Fig. 2, B11 corresponds to a region between 0 and TimeTh1 and between 0 and FreqTh1, B21 corresponds to a region between TimeTh1 and TimeTh2 and between 0 and FreqTh1,..., B23 corresponds to a region beyond TimeTh2 and FreqTh1.

Further, an SINR determination manner of an RS in each region above is determined, when a coordinate difference (that is, a time domain difference and a frequency domain difference) between a current RS to be predicted and a referenced RS corresponds to a region shown in Fig. 2, a corresponding SINR determination manner is selected to determine the SINR of the current RS to be predicted.

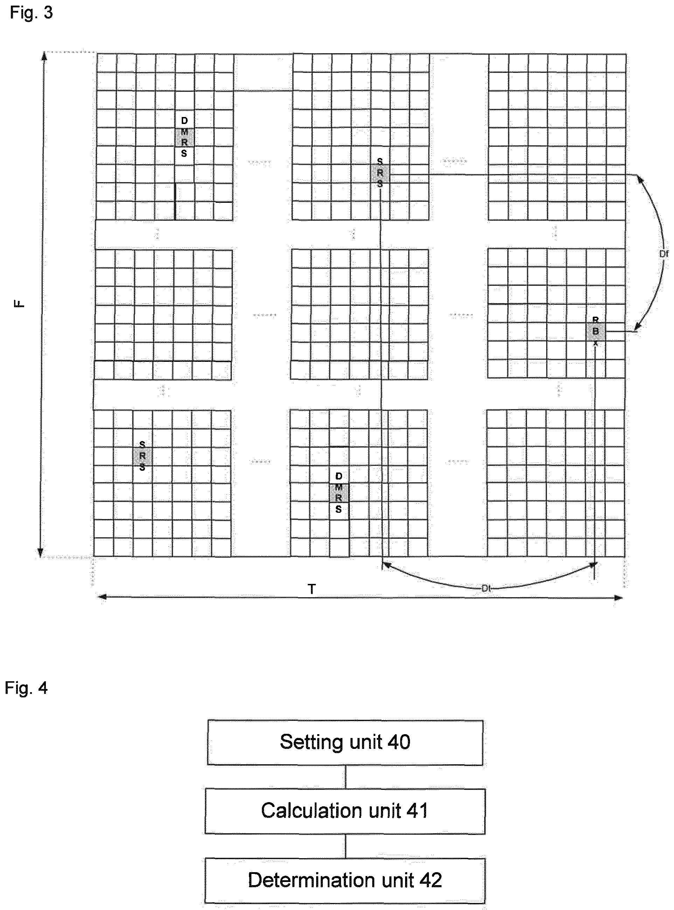

In the disclosure, generally an RS previously transmitted closest to the current RS to be predicted is selected as the referenced RS; as shown in Fig. 3, when the SINR of the RS at RB shown in Fig. 3 is predicted, preferably an RS (SRS) closest to the RS at RB in time domain is selected as the referenced RS. The measurement result of a closest reference signal RS1 is set as SINR1; the measurement result of a second-closest reference signal RS2 is set as SINR2; by such analog, the measurement result of a kth-closest reference signal RSk is set as SINRk. For B11, the SINR of the current channel to be estimated is SINR1.

For B21, the SINR of the current channel to be estimated is: SINR1+[(SINR1-SINR2)/(T1-T2)](T0-T1); or, the SINR of the current channel to be estimated is: $SINR1+[(SINR1-SINR2)/\sqrt{T1^2-T2^2}]\times\sqrt{T0^2-T1^2}$ , where T1 and T2 respectively represent time-domain coordinate values of RS1 and RS2, and T0 represents a time-domain coordinate value of the current channel to be estimated.

For B31, the SINR of the current channel to be estimated is determined according to an inverse function of a probability-distribution function of the SINR of all RSs transmitted previously by the system, wherein the inverse function above is expressed as $CDF^{-1}(x)$, those skilled in the art should understand that the specific determination manner of the inverse function belongs to the existing technology, and the inverse function is not an inventive step of this disclosure, thus the specific implementation detail of the inverse function is not described here. In the inverse function above, $x \in [0, 1]$ and represents a probability of the SINR of the current channel to be estimated being greater than the average value of the SINR of all RSs above.

For B12, the SINR of the channel to be estimated is: SINR1+[(SINR1-SINR2)/(F1-F2)](F0-F1); or, the SINR of the current channel to be estimated is: $SINR1+[(SINR1-SINR2)/\sqrt{F1^2-F2^2}]\sqrt{F0^2-F1^2}$ , where SINR2 represents the SINR of a referenced RS, SINR1 represents the SINR of a first referenced RS, F2 represents the frequency-domain coordinate of a second referenced RS, F1 represents the frequency-domain coordinate of the first referenced RS, and F0 represents the frequency-domain coordinate of the channel to be estimated.

For B13, the SINR of the channel to be estimated is determined according to an inverse function of a probability-distribution function of the SINR of all referenced RSs.

For Bxy, in the condition of x being greater than 1 and y being greater than 1, the SINR determination function of the channel to be estimated is: y·Fx1()/(x+y)+x·F1y()/(x+y), where Fx1() represents the SINR determination function of region Bx1, and F1y() represents the SINR determination function of region B1y.

Of course, in the condition of x being greater than 2 and y being greater than 2, the SINR of the channel to be estimated also can be determined according to an inverse function of a probability-distribution function of the SINR of all referenced RSs.

In the disclosure, for B11, since both the time domain difference and the frequency domain difference between the channel to be estimate and the referenced RS are in the range of the set thresholds (TimeTh1 and FreqTh1 respectively), in this case, it is considered that there is no difference between the SINR of the channel to be estimated and the SINR of the referenced RS, that is, the SINR of the channel to be estimated is equal to the SINR of the referenced RS.

For B21, the frequency domain difference between the current channel to be estimated and the referenced RS is still in the range of FreqTh1, while the time domain difference between the current channel to be estimated and the referenced RS is relatively big (between TimeTh1 and TimeTh2), thus it is determined that there is correlation characteristic in the channel fading between the channel to be estimated and the referenced RS, for example, linear correlation, then the SINR of the current channel to be estimated is calculated through a relevant function.

For B31, although the frequency domain difference between the current channel to be estimated and the referenced RS is still in the range of FreqTh1, the time domain difference is very big, and there is no correlation in the channel fading between the channel to be estimated and the referenced RS; therefore, the SINR of the current channel to be estimated is determined through relevant statistical measures.

For B21, B22 and B23, the frequency domain difference between the current channel to be estimated and the referenced RS is very big, since the correlation in frequency domain is very small, therefore the SINR of the current channel to be estimated is determined based on the determination manner of B31.

First, the coordinates of the current channel to be estimated in the time-frequency distance space are determined, specifically, as shown in Fig. 3, for each channel to be estimated, the location of the current channel to be estimated in time domain and frequency domain is determined, specifically, when the time-frequency region in which the channel to be estimated locates is a preset time-frequency unit, the time-frequency unit of the location in which the channel to be estimated locates is the coordinates of the channel to be estimated; when the time-frequency region in which the channel to be estimated locates is greater than a preset time-frequency unit, the average value of the time domain coordinate of the channel to be estimated is calculated according to the time-frequency unit, and the calculated average coordinate value is taken as the coordinate of the channel to be estimated.

The time domain difference and the frequency domain difference between the channel to be estimated and the referenced RS (the RS which is previously transmitted closest to the channel to be estimated in time domain) are determined and are compared with the time-frequency region set above, to determine the SINR determination manner of the channel to be estimated and thus to determine the SINR of the channel to be estimated. In the disclosure, the referenced RS compared with the coordinate of the channel to be estimated is the RS which is previously transmitted by the system closest to the channel to be estimated in time domain; the coordinate determination manner of the referenced RS is the same as that of the channel to the estimated.

When the number of the threshold above is greater than the range set above, the SINR determination manners of the channels to be estimated in corresponding regions are respectively determined according to the general region division manner mentioned above based on the specific values of m and n.

Fig. 4 shows a structural diagram of a device for predicting SINR in the disclosure, as shown in Fig. 4, the device for predicting SINR according to the disclosure includes a setting unit 40, a calculation unit 41 and a determination unit 42, wherein

the setting unit 40 is configured to set a time domain threshold and/or a frequency domain threshold, divide a time-frequency distance space into different regions according to the set time domain threshold and frequency domain threshold, and set an SINR determination manner for each time-frequency region;

the calculation unit 41 is configured to calculate a time domain difference and a frequency domain difference between a channel to be estimated and a referenced RS;

the determination unit 42 is configured to determine a time-frequency region to which the time domain difference and the frequency domain difference belong, and determine the SINR of the channel to be estimated according to the SINR determination manner corresponding to the time-frequency region to which the time domain difference and the frequency domain difference belong.

The calculation unit 40 is further configured to:

when both the time-frequency regions in which the channel to be estimated and the referenced RS locate are a preset time-frequency unit, calculate the time domain difference and the frequency domain difference according to time-frequency coordinate(s) of the channel to be estimated and/or the referenced RS;

further, when the time-frequency region in which the channel to be estimated locates and/or the referenced RS locates are/is greater than a preset time-frequency unit, calculate average values of a time-domain coordinate and a frequency-domain coordinate of the channel to be estimated and/or the referenced RS according to the time-frequency unit, make the average coordinate value the coordinate of the channel to be estimated and/or the referenced RS, and calculate the time domain difference and the frequency domain difference according to the coordinate of the channel to be estimated and/or the referenced RS.

The setting unit above is further configured to:

when the number of the set time domain threshold is m and the number of the set frequency domain threshold is n, divide the time-frequency distance space into (m+1)(n+1) regions, which includes a region between 0 and the first threshold, a region between the first threshold and the second threshold, ..., a region between the (m-1)th threshold and the mth threshold, a region between the (n-1)th threshold and the nth threshold, a region beyond the mth threshold and the nth threshold, wherein both m and n are integers no smaller than 0, and are not equal to 0 simultaneously.

Bxy is used for representing a divided time-frequency region, x represents a region order in time domain and y represents a region order in frequency domain, in which, x is not less than 1 but not greater than (m+1), y is not less than 1 but not greater than (n+1);

the determination unit 42 is further configured to determine that:

for B11, the SINR of the channel to be estimated is equal to that of the referenced RS;

for B21, the SINR of the channel to be estimated is: SINR1+[(SINR1-SINR2)/(T1-T2)](T0-T1), where SINR2 represents the SINR of a referenced RS, SINR1 represents the SINR of a first referenced RS, T2 represents the time-domain coordinate of a second referenced RS, T1 represents the time-domain coordinate of the first referenced RS, and T0 represents the time-domain coordinate of the channel to be estimated;

for B31, B41, ..., Bm1, and B(m+1)1, the SINR of the channel to be estimated according to an inverse function of a probability-distribution function of the SINR of all referenced RSs;

for B12, the SINR of the channel to be estimated is: $SINR1+[(SINR1-SINR2)/(F1-F2)](F0-F1)$, where SINR2 represents the SINR of a referenced RS, SINR1 represents the SINR of a first referenced RS, F2 represents the frequency-domain coordinate of a second referenced RS, F1 represents the frequency-domain coordinate of the first referenced RS, and F0 represents the frequency-domain coordinate of the channel to be estimated;

for B13, B14, ..., Bn1, and B1(n+1), the SINR of the channel to be estimated is determined according to an inverse function of a probability-distribution function of the SINR of all referenced RSs; and

for Bxy, in the condition of x being greater than 1 and y being greater than 1, the SINR determination function of the channel to be estimated is: $y \cdot Fx1()/(x+y)+x \cdot F1y()/(x+y)$, where Fx1() represents the SINR determination function of region Bx1, and F1y() represents the SINR determination function of region B1y.

Of course, in the condition of x being greater than 2 and y being greater than 2, the SINR of the channel to be estimated also can be determined according to an inverse function of a probability-distribution function of the SINR of all referenced RSs.

Or, the determination unit 42 is further configured to determine that:

for B21, the SINR of the channel to be estimated is: $SINR1+[(SINR1-SINR2)/(T1^2-T2^2)](T0^2-T1^2)$, where SINR2 represents the SINR of a referenced RS, SINR1 represents the SINR of a first referenced RS, T2 represents the time-domain coordinate of a second referenced RS, T1 represents the time-domain coordinate of the first referenced RS, and T0 represents the time-domain coordinate of the channel to be estimated.

Or, the determination unit 42 is further configured to determine that:

for B12, the SINR determination manner of the channel to be estimated is: $SINR1+[(SINR1-SINR2)/(F1^2-F2^2)](F0^2-F1^2)$, where SINR2 represents the SINR of a referenced RS, SINR1 represents the SINR of a first referenced RS, F2 represents the time-domain coordinate of a second referenced RS, F1 represents the time-domain coordinate of the first referenced RS, and F0 represents the time-domain coordinate of the channel to be estimated. The SINR determination manner of the channel to be estimated also can be:

$$SINR1+[(SINR1-SINR2)/\sqrt{F1^2-F2^2}]\sqrt{F0^2-F1^2}\,,$$ where SINR2 represents the SINR of a referenced RS, SINR1 represents the SINR of a first referenced RS, T2 represents the time-domain coordinate of a second referenced RS, F1 represents the time-domain coordinate of the first referenced RS, and F0 represents the time-domain coordinate of the channel to be estimated, wherein F0>F1>F2.

When the number of the referenced RS above is one, the referenced RS is the RS transmitted closest to the channel to be estimated in time domain; when the number of the referenced RSs is two, the first referenced RS is the RS transmitted closest to the channel to be estimated in time domain, and the second referenced RS is the RS transmitted second-closest to the channel to be estimated in time domain; when the number of the referenced RSs is no less than three, a same number of RSs closest to the channel to be estimated in time domain are selected in turn as corresponding referenced RSs.

In the disclosure, the referenced RS compared with the coordinate of the channel to be estimated is the RS which is previously transmitted by the system closest to the channel to be estimated in time domain.

The m above is 1, 2, 3 or 4, correspondingly, n is 1, 2 or 3.

Those skilled in the art should understand that the device for predicting SINR shown in Fig. 4 is designed for implementing the method for predicting SINR described above; the function of each processing unit in the device shown in Fig. 4 can be understood by reference to the description of the method above; the function of each processing unit can be implemented by a program running on a processor, and also can be implemented by a specific logic circuit.

The above is only the preferred embodiment of the disclosure, and is not intended to limit the protection scope of the disclosure.

## Claims

1. A method for predicting Signal to Interference plus Noise Ratio, SINR, comprising: setting a time domain threshold and a frequency domain threshold, dividing a time-frequency distance space into different regions according to the set time domain threshold and frequency domain threshold, and setting an SINR determination manner for each time-frequency region (S101);
the method further comprising:

calculating a time domain difference and a frequency domain difference between a channel to be estimated and a referenced Reference Signal, RS; wherein the RS is previously transmitted closest to the channel to be estimated in time domain;
determining a time-frequency region to which the time domain difference and the frequency domain difference belong; and
determining the SINR of the channel to be estimated according to the SINR determination manner corresponding to the time-frequency region to which the time domain difference and the frequency domain difference belong (S102).

2. The method according to claim 1, wherein the step of calculating a time domain difference and a frequency domain difference between a channel to be estimated and a referenced RS comprises:

when both the time-frequency regions in which the channel to be estimated and the referenced RS locate are a preset time-frequency unit, calculating the time domain difference and the frequency domain difference according to time-frequency coordinate of the channel to be estimated and/or the referenced RS;
when the time-frequency region in which the channel to be estimated locates and/or the time-frequency region in which the referenced RS locates are/is greater than a preset time-frequency unit, calculating an average value of a time-domain coordinate and a frequency-domain coordinate of the channel to be estimated and/or the referenced RS according to the time-frequency unit, making the average coordinate value as the coordinate of the channel to be estimated and/or the referenced RS and calculating the time domain difference and the frequency domain difference according to the coordinate of the channel to be estimated and/or the referenced RS.

3. The method according to claim 1, wherein the step of dividing a time-frequency distance space into different regions according to the set time domain threshold and frequency domain threshold comprises:

when the number of the set time domain threshold is m and the number of the set frequency domain threshold is n, dividing the time-frequency distance space into $(m+1)(n+1)$ regions, which comprise a region between 0 and the first threshold, a region between the first threshold and the second threshold, ..., a region between the $(m-1)$th threshold and the mth threshold, a region between the $(n-1)$th threshold and the nth threshold, a region beyond the mth threshold and the nth threshold, wherein both m and n are integers no smaller than 0, and are not equal to 0 simultaneously.

4. The method according to claim 3, wherein Bxy is used for representing a divided time-frequency region, x represents a region order in time domain and y represents a region order in frequency domain, in which, x is not less than 1 but not greater than $(m+1)$, y is not less than 1 but not greater than $(n+1)$;
the step of setting an SINR determination manner for each time-frequency region comprises:

for B11, the SINR of the channel to be estimated being equal to that of the referenced RS;
for B21, the SINR of the channel to be estimated being: $SINR1+[(SINR1-SINR2)/(T1-T2)](T0-T1)$, where SINR1 represents the SINR of an RS closest to the channel to be estimated in time domain; SINR2 represents the SINR of an RS second-closest to the channel to be estimated in time domain; T1 represents the time-domain coordinate of the RS closest to the channel to be estimated in time domain; T2 represents the time-domain coordinate of the RS second-closest to the channel to be estimated in time domain; and T0 represents the time-domain coordinate of the channel to be estimated;
for B31, B41, ..., Bm1, and B(m+1)1, determining the SINR of the channel to be estimated according to an inverse function of a probability-distribution function of the SINR of all referenced RSs; and
for B12, the SINR of the channel to be estimated being: $SINR1+[(SINR1-SINR2)/(F1-F2)](F0-F1)$, where SINR1 represents the SINR of an RS closest to the channel to be estimated in time domain; SINR2 represents the SINR of an RS second-closest to the channel to be estimated in time domain; F1 represents the frequency-domain coordinate of the RS closest to the channel to be estimated in time domain; F2 represents the frequency-domain coordinate of the RS second-closest to the channel to be estimated in time domain; and F0 represents the frequency-domain coordinate of the channel to be estimated;
for B13, B14, ..., B1n, and B1(n+1), determining the SINR of the channel to be estimated according to an inverse function of a probability-distribution function of the SINR of all referenced RSs;
for Bxy, in the condition of x being greater than 1 and y being greater than 1, the SINR determination function of the channel to be estimated being: y·Fx1()/(x+y)+x·F1y()/(x+y), where Fx1() represents the SINR determination function of region Bx1, and F1y() represents the SINR determination function of region B1y; wherein for the region with x no small than 2 and y no smaller than 2, determining the SINR of the channel to be estimated according to an inverse function of a probability-distribution function of the SINR of all referenced RSs;
or, the step of setting an SINR determination manner for each time-frequency region comprises:

for B11, the SINR of the channel to be estimated being equal to that of the referenced RS;
for B21, the SINR of the channel to be estimated being: SINR1+[(SINR1-SINR2)/(T1-T2)](T0-T1), where SINR1 represents the SINR of an RS closest to the channel to be estimated in time domain; SINR2 represents the SINR of an RS second-closest to the channel to be estimated in time domain; T1 represents the time-domain coordinate of the RS closest to the channel to be estimated in time domain; T2 represents the time-domain coordinate of the RS second-closest to the channel to be estimated in time domain; and T0 represents the time-domain coordinate of the channel to be estimated;
for B31, B41, ..., Bm1, and B(m+1)1, determining the SINR of the channel to be estimated according to an inverse function of a probability-distribution function of the SINR of all referenced RSs;
for B12, the SINR of the channel to be estimated being: SINR1+[(SINR1-SINR2)/(F1-F2)](F0-F1), where SINR1 represents the SINR of an RS closest to the channel to be estimated in time domain; SINR2 represents the SINR of an RS second-closest to the channel to be estimated in time domain; F1 represents the frequency-domain coordinate of the RS closest to the channel to be estimated in time domain; F2 represents the frequency-domain coordinate of the RS second-closest to the channel to be estimated in time domain; and F0 represents the frequency-domain coordinate of the channel to be estimated;
for B13, B14, ..., Bn1, and B1(n+1), determining the SINR of the channel to be estimated according to an inverse function of a probability-distribution function of the SINR of all referenced RSs; and
for Bxy, in the condition of x being greater than 1 and y being greater than 1, the SINR determination function of the channel to be estimated being: y·Fx1()/(x+y)+x·F1y()/(x+y), where Fx1() represents the SINR determination function of region Bx1, and F1y() represents the SINR determination function of region B1y.

5. The method according to claim 4, wherein for B21, the SINR of the channel to be estimated further being:

$SINR1+[(SINR1-SINR2)/(T1^2-T2^2)](T0^2-T1^2)$ or $SINR1+[(SINR1-SINR2)/\sqrt{T1^2-T2^2}]\times\sqrt{T0^2-T1^2}$ ,

where SINR1 represents the SINR of an RS closest to the channel to be estimated in time domain; SINR2 represents the SINR of an RS second-closest to the channel to be estimated in time domain; T1 represents the time-domain coordinate of the RS closest to the channel to be estimated in time domain; T2 represents the time-domain coordinate of the RS second-closest to the channel to be estimated in time domain; and T0 represents the time-domain coordinate of the channel to be estimated; wherein T0>T1>T2;

for B12, the SINR of the channel to be estimated further being: $SINR1+[(SINR1-SINR2)/(F1^2-F2^2)](F0^2-F1^2)$ or

$SINR1+[(SINR1-SINR2)/\sqrt{F1^2-F2^2}]\sqrt{F0^2-F1^2}$ , where SINR1 represents the SINR of an RS closest to the channel to be estimated in time domain; SINR2 represents the SINR of an RS second-closest to the channel to be estimated in time domain; F1 represents the frequency-domain coordinate of the RS closest to the channel to be estimated in time domain; F2 represents the frequency-domain coordinate of the RS second-closest to the channel to be estimated in time domain; and F0 represents the frequency-domain coordinate of the channel to be estimated; wherein F0>F1>F2.

6. The method according to any one of claims 3 to 5, wherein m is 1, 2, 3 or 4, wherein n is 1, 2 or 3.

7. A device for predicting Signal to Interference plus Noise Ratio, SINR, comprising a setting unit (40), a calculation unit (41) and a determination unit (42), wherein
the setting unit (40) is configured to set a time domain threshold and a frequency domain threshold, divide a time-frequency distance space into different regions according to the set time domain threshold and frequency domain threshold, and set an SINR determination manner for each time-frequency region;
the calculation unit (41) is configured to calculate a time domain difference and a frequency domain difference between a channel to be estimated and a referenced Reference Signal, RS; wherein the RS is previously transmitted closest to the channel to be estimated in time domain; and
the determination unit (42) is configured to determine a time-frequency region to which the time domain difference and the frequency domain difference belong, and determine the SINR of the channel to be estimated according to the SINR determination manner corresponding to the time-frequency region to which the time domain difference and the frequency domain difference belong.

8.  The device according to claim 7, wherein the calculation unit (41) is further configured to:

    when both the time-frequency regions in which the channel to be estimated and the referenced RS locate are a preset time-frequency unit, calculate the time domain difference and the frequency domain difference according to time-frequency coordinate of the channel to be estimated and/or the referenced RS;
    when the time-frequency region in which the channel to be estimated locates and/or the time-frequency region in which the referenced RS locates are/is greater than a preset time-frequency unit, calculate an average value of a time-domain coordinate and a frequency-domain coordinate of the channel to be estimated and/or the referenced RS according to the time-frequency unit, make the average coordinate value as the coordinate of the channel to be estimated and/or the referenced RS, and calculate the time domain difference and the frequency domain difference according to the coordinate of the channel to be estimated and/or the referenced RS.

9.  The device according to claim 7, wherein the setting unit (40) is further configured to: when the number of the set time domain threshold is m and the number of the set frequency domain threshold is n, divide the time-frequency distance space into (m+1)(n+1) regions, which comprise a region between 0 and the first threshold, a region between the first threshold and the second threshold, ..., a region between the (m-1)th threshold and the mth threshold, a region between the (n-1)th threshold and the nth threshold, a region beyond the mth threshold and the nth threshold, wherein both m and n are integers no smaller than 0, and are not equal to 0 simultaneously.

10. The device according to claim 9, wherein Bxy is used for representing a divided time-frequency region, x represents a region order in time domain and y represents a region order in frequency domain, in which, x is not less than 1 but not greater than (m+1), y is not less than 1 but not greater than (n+1);
    the determination unit (42) is further configured to determine that:

    for B11, the SINR of the channel to be estimated is equal to that of the referenced RS;
    for B21, the SINR of the channel to be estimated is: SINR1+[(SINR1-SINR2)/(T1-T2)](T0-T1), where SINR1 represents the SINR of an RS closest to the channel to be estimated in time domain; SINR2 represents the SINR of an RS second-closest to the channel to be estimated in time domain; T1 represents the time-domain coordinate of the RS closest to the channel to be estimated in time domain; T2 represents the time-domain coordinate of the RS second-closest to the channel to be estimated in time domain; and T0 represents the time-domain coordinate of the channel to be estimated;
    for B31, B41, ..., Bm1, and B(m+1)1, the SINR of the channel to be estimated is determined according to an inverse function of a probability-distribution function of the SINR of all referenced RSs; and
    for B12, the SINR of the channel to be estimated being: SINR1+[(SINR1-SINR2)/(F1-F2)](F0-F1), where SINR1 represents the SINR of an RS closest to the channel to be estimated in time domain; SINR2 represents the SINR of an RS second-closest to the channel to be estimated in time domain; F1 represents the frequency-domain coordinate of the RS closest to the channel to be estimated in time domain; F2 represents the frequency-domain coordinate of the RS second-closest to the channel to be estimated in time domain; and F0 represents the frequency-domain coordinate of the channel to be estimated;
    for B13, B14, ..., B1n, and B1(n+1), determining the SINR of the channel to be estimated according to an inverse function of a probability-distribution function of the SINR of all referenced RSs;
    for Bxy, in the condition of x being greater than 1 and y being greater than 1, the SINR determination function of the channel to be estimated being: y·Fx1()/(x+y)+x·F1y()/(x+y), where Fx1() represents the SINR determination function of region Bx1, and F1y() represents the SINR determination function of region B1y; wherein for the region with x no small than 2 and y no smaller than 2, the SINR of the channel to be estimated is determined according to an inverse function of a probability-distribution function of the SINR of all referenced RSs;
    or, the determination unit (42) is further configured to determine that:

    for B11, the SINR of the channel to be estimated is equal to that of the referenced RS;
    for B21, the SINR of the channel to be estimated is: SINR1+[(SINR1-SINR2)/(T1-T2)](T0-T1), where SINR1 represents the SINR of an RS closest to the channel to be estimated in time domain; SINR2 represents the SINR of an RS second-closest to the channel to be estimated in time domain; T1 represents the time-domain coordinate of the RS closest to the channel to be estimated in time domain; T2 represents the time-domain coordinate of the RS second-closest to the channel to be estimated in time domain; and T0 represents the time-domain coordinate of the channel to be estimated;
    for B31, B41, ..., Bm1, and B(m+1)1, the SINR of the channel to be estimated is determined according to an inverse function of a probability-distribution function of the SINR of all referenced RSs;

for B12, the SINR of the channel to be estimated is: SINR1+[(SINR1-SINR2)/(F1-F2)](F0-F1), where SINR1 represents the SINR of an RS closest to the channel to be estimated in time domain; SINR2 represents the SINR of an RS second-closest to the channel to be estimated in time domain; F1 represents the frequency-domain coordinate of the RS closest to the channel to be estimated in time domain; F2 represents the frequency-domain coordinate of the RS second-closest to the channel to be estimated in time domain; and F0 represents the frequency-domain coordinate of the channel to be estimated;

for B13, B14, ..., Bn1, and B1(n+1), the SINR of the channel to be estimated is determined according to an inverse function of a probability-distribution function of the SINR of all referenced RSs; and

for Bxy, in the condition of x being greater than 1 and y being greater than 1, the SINR determination function of the channel to be estimated is: $y \cdot Fx1()/(x+y)+x \cdot F1y()/(x+y)$, where Fx1() represents the SINR determination function of region Bx1, and F1y() represents the SINR determination function of region B1y.

11. The device according to claim 10, wherein the determination unit (42) is further configured to determine that:

for B21, the SINR of the channel to be estimated is: $SINR1+[(SINR1-SINR2)/(T1^2-T2^2)](T0^2-T1^2)$ or

$$SINR1+[(SINR1-SINR2)/\sqrt{T1^2-T2^2}] \times \sqrt{T0^2-T1^2}$$, where SINR1 represents the SINR of an RS closest to the channel to be estimated in time domain; SINR2 represents the SINR of an RS second-closest to the channel to be estimated in time domain; T1 represents the time-domain coordinate of the RS closest to the channel to be estimated in time domain; T2 represents the time-domain coordinate of the RS second-closest to the channel to be estimated in time domain; and T0 represents the time-domain coordinate of the channel to be estimated; wherein T0> T1>T2;

for B12, the SINR of the channel to be estimated is: $SINR1+[(SINR1-SINR2)/(F1^2-F2^2)](F0^2-F1^2)$ or

$$SINR1+[(SINR1-SINR2)/\sqrt{F1^2-F2^2}]\sqrt{F0^2-F1^2}$$, where SINR1 represents the SINR of an RS closest to the channel to be estimated in time domain; SINR2 represents the SINR of an RS second-closest to the channel to be estimated in time domain; F1 represents the frequency-domain coordinate of the RS closest to the channel to be estimated in time domain; F2 represents the frequency-domain coordinate of the RS second-closest to the channel to be estimated in time domain; and F0 represents the frequency-domain coordinate of the channel to be estimated; wherein F0> F1>F2.

12. The device according to any one of claims 9 to 11, wherein m is 1, 2, 3 or 4, wherein n is 1, 2 or 3.

**Patentansprüche**

1. Verfahren zum Vorhersagen eines Signal-Interferenz- und Rauschverhältnisses (SINR), das Folgendes umfasst: Einstellen einer Zeitbereichsschwelle und einer Frequenzbereichsschwelle, Teilen eines Zeit-Frequenz-Distanzraums in verschiedene Regionen gemäß der eingestellten Zeitbereichsschwelle und Frequenzbereichsschwelle, und Einstellen einer SINR-Feststellungsweise für jede Zeit-Frequenz-Region (S101);

wobei das Verfahren des Weiteren Folgendes umfasst:

Berechnen einer Zeitbereichsdifferenz und einer Frequenzbereichsdifferenz zwischen einem zu schätzenden Kanal und einem referenzierten Bezugssignal (RS); wobei das RS zuvor dem Kanal am nächsten gesendet wird, der im Zeitbereich zu schätzen ist;

Bestimmen einer Zeit-Frequenz-Region, zu der die Zeitbereichsdifferenz und die Frequenzbereichsdifferenz gehören; und

Bestimmen des SINR des zu schätzenden Kanals gemäß der SINR-Feststellungsweise entsprechend der Zeit-Frequenz-Region, zu der die Zeitbereichsdifferenz und die Frequenzbereichsdifferenz gehören (S102).

2. Verfahren nach Anspruch 1, wobei der Schritt des Berechnens einer Zeitbereichsdifferenz und einer Frequenzbereichsdifferenz zwischen einem zu schätzenden Kanal und einem referenzierten RS Folgendes umfasst:

wenn beide Zeit-Frequenz-Regionen, in denen sich der zu schätzende Kanal und das referenzierte RS befinden, eine voreingestellte Zeit-Frequenz-Einheit sind, Berechnen der Zeitbereichsdifferenz und der Frequenzbereichsdifferenz gemäß der Zeit-Frequenz-Koordinate des zu schätzenden Kanals und/oder des referenzierten RS,

wenn die Zeit-Frequenz-Region, in der sich der zu schätzende Kanal befindet, und/oder die Zeit-Frequenz-Region, in der sich das referenzierte RS befindet, größer sind als eine voreingestellte Zeit-Frequenz-Einheit, Berechnen eines Durchschnittswertes einer Zeitbereichskoordinate und einer Frequenzbereichskoordinate des zu schätzenden Kanals und/oder der referenzierten RS gemäß der Zeit-Frequenz-Einheit, Bilden des durchschnittlichen Koordinatenwertes als die Koordinate des zu schätzenden Kanals und/oder des referenzierten RS, und Berechnen der Zeitbereichsdifferenz und der Frequenzbereichsdifferenz gemäß der Koordinate des zu schätzenden Kanals und/oder des referenzierten RS.

3. Verfahren nach Anspruch 1, wobei der Schritt des Teilens eines Zeit-Frequenz-Distanzraums in verschiedene Regionen gemäß der eingestellten Zeitbereichsschwelle und und/oder Frequenzbereichsschwelle Folgendes umfasst:

wenn die Zahl der eingestellten Zeitbereichsschwelle m ist und die Zahl der eingestellten Frequenzbereichsschwelle n ist, Teilen des Zeit-Frequenz-Distanzraums in $(m + 1)(n + 1)$ Regionen, die eine Region zwischen 0 und der ersten Schwelle, eine Region zwischen der ersten Schwelle und der zweiten Schwelle, eine Region zwischen der (m-1)-ten Schwelle und der m-ten Schwelle, eine Region zwischen der (n-1)-ten Schwelle und der n-ten Schwelle, und eine Region jenseits der m-ten Schwelle und der n-ten Schwelle umfassen, wobei sowohl m als auch n ganze Zahlen nicht kleiner als 0 sind und gleichzeitig nicht gleich 0 sind.

4. Verfahren nach Anspruch 3, wobei Bxy zum Darstellen einer geteilten Zeit-Frequenz-Region verwendet wird, x eine Regionsreihenfolge im Zeitbereich darstellt und y eine Regionsreihenfolge im Frequenzbereich darstellt, wobei x nicht kleiner als 1, aber nicht größer als $(m + 1)$ ist und y nicht kleiner als 1, aber nicht größer als $(n + 1)$ ist; der Schritt des Einstellens einer SINR-Feststellungsweise für jede Zeit-Frequenz-Region umfasst:

dass für B11 das SINR des zu schätzenden Kanals gleich dem des referenzierten RS ist; dass für B21 das SINR des zu schätzenden Kanals $SINR1 + [(SINR1-SINR2) / (T1-T2)](T0-T1)$ ist, wobei SINR1 das SINR eines RS darstellt, das dem zu schätzenden Kanal im Zeitbereich am nächsten liegt; SINR2 das SINR eines RS darstellt, das dem zu schätzenden Kanal im Zeitbereich am zweitnächsten liegt; T1 die Zeitbereichskoordinate des RS darstellt, das dem zu schätzenden Kanal im Zeitbereich am nächsten liegt; T2 die Zeitbereichskoordinate des RS darstellt, das dem zu schätzenden Kanal im Zeitbereich am zweitnächsten liegt; und T0 die Zeitbereichskoordinate des zu schätzenden Kanals darstellt; für B31, B41, ..., Bm1 und B(m + 1)1, Bestimmen des SINR des zu schätzenden Kanals gemäß einer inversen Funktion einer Wahrscheinlichkeitsverteilungsfunktion des SINR aller referenzierten RSs; und dass für B12 das SINR des zu schätzenden Kanals $SINR1 + [(SINR1-SINR2) / (F1-F2)](F0-F1)$ ist, wobei SINR1 das SINR eines RS darstellt, das dem zu schätzenden Kanal im Zeitbereich am nächsten liegt; SINR2 das SINR eines RS darstellt, das dem zu schätzenden Kanal im Zeitbereich am zweitnächsten liegt; F1 die Frequenzbereichskoordinate des RS darstellt, das dem zu schätzenden Kanal im Zeitbereich am nächsten liegt; F2 die Frequenzbereichskoordinate des RS darstellt, das dem zu schätzenden Kanal im Zeitbereich am zweitnächsten liegt; und F0 die Frequenzbereichskoordinate des zu schätzenden Kanals darstellt; für B13, B14, ..., B1n und B1(n + 1), Bestimmen des SINR des zu schätzenden Kanals gemäß einer inversen Funktion einer Wahrscheinlichkeitsverteilungsfunktion des SINR aller referenzierten RSs; dass für Bxy, unter der Bedingung, dass x größer ist als 1 und y größer ist als 1, die SINR-Feststellungsfunktion des zu schätzenden Kanals $y·Fx1() / (x+y) + x·F1y() / (x + y)$ ist, wobei Fx1() die SINR-Feststellungsfunktion von Region Bx1 darstellt und F1y() die SINR-Feststellungsfunktion von Region B1y darstellt; und für die Region mit x nicht kleiner als 2 und y nicht kleiner als 2, Bestimmen des SINR des zu schätzenden Kanals gemäß einer inversen Funktion einer Wahrscheinlichkeitsverteilungsfunktion des SINR aller referenzierten RSs; oder der Schritt des Einstellens einer SINR-Feststellungsweise für jede Zeit-Frequenz-Region umfasst:

dass für B11 das SINR des zu schätzenden Kanals gleich dem des referenzierten RS ist; dass für B21 das SINR des zu schätzenden Kanals $SINR1 + [(SINR1-SINR2) / (T1-T2)](T0-T1)$ ist, wobei SINR1 das SINR eines RS darstellt, das dem zu schätzenden Kanal im Zeitbereich am nächsten liegt; SINR2 das SINR eines RS darstellt, das dem zu schätzenden Kanal im Zeitbereich am zweitnächsten liegt; T1 die Zeitbereichskoordinate des RS darstellt, das dem zu schätzenden Kanal im Zeitbereich am nächsten liegt; T2 die Zeitbereichskoordinate des RS darstellt, das dem zu schätzenden Kanal im Zeitbereich am zweitnächsten liegt; und T0 die Zeitbereichskoordinate des zu schätzenden Kanals darstellt; für B31, B41, ..., Bm1 und B(m + 1)1, Bestimmen des SINR des zu schätzenden Kanals gemäß einer inversen Funktion einer Wahrscheinlichkeitsverteilungsfunktion des SINR aller referenzierten RSs; dass für B12 das SINR des zu schätzenden Kanals $SINR1 + [(SINR1-SINR2) / (F1-F2)](F0-F1)$ ist, wobei SINR1 das SINR eines RS darstellt, das dem zu schätzenden Kanal im Zeitbereich am nächsten liegt;

SINR2 das SINR eines RS darstellt, das dem zu schätzenden Kanal im Zeitbereich am zweitnächsten liegt; F1 die Frequenzbereichskoordinate des RS darstellt, das dem zu schätzenden Kanal im Zeitbereich am nächsten liegt; F2 die Frequenzbereichskoordinate des RS darstellt, das dem zu schätzenden Kanal im Zeitbereich am zweitnächsten liegt; und F0 die Frequenzbereichskoordinate des zu schätzenden Kanals darstellt;

für B13, B14, ..., Bn1 und B1(n + 1), Bestimmen des SINR des zu schätzenden Kanals gemäß einer inversen Funktion einer Wahrscheinlichkeitsverteilungsfunktion des SINR aller referenzierten RSs; und

dass für Bxy, unter der Bedingung, dass x größer ist als 1 und y größer ist als 1, die SINR-Feststellungsfunktion des zu schätzenden Kanals $y \cdot Fx1() / (x + y) + x \cdot F1y() / (x + y)$ ist, wobei Fx1()die SINR-Feststellungsfunktion von Region Bx1 darstellt und F1y()die SINR-Feststellungsfunktion von Region B1y darstellt.

5. Verfahren nach Anspruch 4, wobei für B21 das SINR des zu schätzenden Kanals des Weiteren $SINR1 + [(SINR1-SINR2) / (T1^2-T2^2)](T0^2-T1^2)$ ist oder $SINR1+[(SINR1-SINR2)/ \sqrt{T1^2-T2^2} ]\times \sqrt{T0^2-T1^2}$ ist, wobei SINR1 das SINR eines RS darstellt, das dem zu schätzenden Kanal im Zeitbereich am nächsten liegt; SINR2 das SINR eines RS darstellt, das dem zu schätzenden Kanal im Zeitbereich am zweitnächsten liegt; T1 die Zeitbereichskoordinate des RS darstellt, das dem zu schätzenden Kanal im Zeitbereich am nächsten liegt; T2 die Zeitbereichskoordinate des RS darstellt, das dem zu schätzenden Kanal im Zeitbereich am zweitnächsten liegt; und T0 die Zeitbereichskoordinate des zu schätzenden Kanals darstellt; wobei T0>T1>T2;

für B12 das SINR des zu schätzenden Kanals des Weiteren $SINR1 + [(SINR1-SINR2) / (F1^2-F2^2)](F0^2-F1^2)$ ist oder

$SINR1+[(SINR1-SINR2)/ \sqrt{F1^2-F2^2} ] \sqrt{F0^2-F1^2}$ ist, wobei SINR1 das SINR eines RS darstellt, das dem zu schätzenden Kanal im Zeitbereich am nächsten liegt; SINR2 das SINR eines RS darstellt, das dem zu schätzenden Kanal im Zeitbereich am zweitnächsten liegt; F1 die Frequenzbereichskoordinate des RS darstellt, das dem zu schätzenden Kanal im Zeitbereich am nächsten liegt; F2 die Frequenzbereichskoordinate des RS darstellt, das dem zu schätzenden Kanal im Zeitbereich am zweitnächsten liegt; und F0 die Frequenzbereichskoordinate des zu schätzenden Kanals darstellt; wobei F0>F1>F2.

6. Verfahren nach einem der Ansprüche 3 bis 5, wobei m 1, 2, 3 oder 4 ist und wobei n 1, 2 oder 3 ist.

7. Vorrichtung zum Vorhersagen eines Signal-Interferenz- und Rauschverhältnisses (SINR), die eine Einstelleinheit (40), eine Berechnungseinheit (41) und eine Bestimmungseinheit (42) umfasst, wobei

die Einstelleinheit (40) dafür konfiguriert ist, eine Zeitbereichsschwelle und eine Frequenzbereichsschwelle einzustellen, einen Zeit-Frequenz-Distanzraum in verschiedene Regionen gemäß der eingestellten Zeitbereichsschwelle und Frequenzbereichsschwelle zu teilen, und eine SINR-Feststellungsweise für jede Zeit-Frequenz-Region einzustellen;

die Berechnungseinheit (41) dafür konfiguriert ist, eine Zeitbereichsdifferenz und eine Frequenzbereichsdifferenz zwischen einem zu schätzenden Kanal und einem referenzierten Bezugssignal (RS) zu berechnen; wobei das RS zuvor dem Kanal am nächsten gesendet wird, der im Zeitbereich zu schätzen ist; und

die Bestimmungseinheit (42) dafür konfiguriert ist, eine Zeit-Frequenz-Region zu bestimmen, zu der die Zeitbereichsdifferenz und die Frequenzbereichsdifferenz gehören, und das SINR des zu schätzenden Kanals gemäß der SINR-Feststellungsweise entsprechend der Zeit-Frequenz-Region, zu der die Zeitbereichsdifferenz und die Frequenzbereichsdifferenz gehören, zu bestimmen.

8. Vorrichtung nach Anspruch 7, wobei die Berechnungseinheit (41) des Weiteren für Folgendes konfiguriert ist:

wenn beide Zeit-Frequenz-Regionen, in denen sich der zu schätzende Kanal und das referenzierte RS befinden, eine voreingestellte Zeit-Frequenz-Einheit sind, Berechnen der Zeitbereichsdifferenz und der Frequenzbereichsdifferenz gemäß der Zeit-Frequenz-Koordinate des zu schätzenden Kanals und/oder des referenzierten RS,

wenn die Zeit-Frequenz-Region, in der sich der zu schätzende Kanal befindet, und/oder die Zeit-Frequenz-Region, in der sich das referenzierte RS befindet, größer sind als eine voreingestellte Zeit-Frequenz-Einheit, Berechnen eines Durchschnittswertes einer Zeitbereichskoordinate und einer Frequenzbereichskoordinate des zu schätzenden Kanals und/oder der referenzierten RS gemäß der Zeit-Frequenz-Einheit, Bilden des durchschnittlichen Koordinatenwertes als die Koordinate des zu schätzenden Kanals und/oder des referenzierten RS, und Berechnen der Zeitbereichsdifferenz und der Frequenzbereichsdifferenz gemäß der Koordinate des zu schätzenden Kanals und/oder des referenzierten RS.

9.  Vorrichtung nach Anspruch 7, wobei die Einstelleinheit (40) des Weiteren für Folgendes konfiguriert ist: wenn die Zahl der eingestellten Zeitbereichsschwelle m ist und die Zahl der eingestellten Frequenzbereichsschwelle n ist, Teilen des Zeit-Frequenz-Distanzraums in $(m + 1)(n + 1)$ Regionen, die eine Region zwischen 0 und der ersten Schwelle, eine Region zwischen der ersten Schwelle und der zweiten Schwelle, eine Region zwischen der (m-1)-ten Schwelle und der m-ten Schwelle, eine Region zwischen der (n-1)-ten Schwelle und der n-ten Schwelle, und eine Region jenseits der m-ten Schwelle und der n-ten Schwelle umfassen, wobei sowohl m als auch n ganze Zahlen nicht kleiner als 0 sind und gleichzeitig nicht gleich 0 sind.

10. Vorrichtung nach Anspruch 9, wobei Bxy zum Darstellen einer geteilten Zeit-Frequenz-Region verwendet wird, x eine Regionsreihenfolge im Zeitbereich darstellt und y eine Regionsreihenfolge im Frequenzbereich darstellt, wobei x nicht kleiner als 1, aber nicht größer als $(m + 1)$ ist und y nicht kleiner als 1, aber nicht größer als $(n + 1)$ ist; die Bestimmungseinheit (42) des Weiteren dafür konfiguriert ist zu bestimmen:

    dass für B11 das SINR des zu schätzenden Kanals gleich dem des referenzierten RS ist;
    dass für B21 das SINR des zu schätzenden Kanals SINR1 + [(SINR1-SINR2) / (T1-T2)](T0-T1) ist, wobei SINR1 das SINR eines RS darstellt, das dem zu schätzenden Kanal im Zeitbereich am nächsten liegt; SINR2 das SINR eines RS darstellt, das dem zu schätzenden Kanal im Zeitbereich am zweitnächsten liegt; T1 die Zeitbereichskoordinate des RS darstellt, das dem zu schätzenden Kanal im Zeitbereich am nächsten liegt; T2 die Zeitbereichskoordinate des RS darstellt, das dem zu schätzenden Kanal im Zeitbereich am zweitnächsten liegt; und T0 die Zeitbereichskoordinate des zu schätzenden Kanals darstellt;
    wobei für B31, B41, ..., Bm1 und B(m + 1)1 das SINR des zu schätzenden Kanals gemäß einer inversen Funktion einer Wahrscheinlichkeitsverteilungsfunktion des SINR aller referenzierten RSs bestimmt wird; und
    dass für B12 das SINR des zu schätzenden Kanals SINR1 + [(SINR1-SINR2) / (F1-F2)](F0-F1) ist, wobei SINR1 das SINR eines RS darstellt, das dem zu schätzenden Kanal im Zeitbereich am nächsten liegt; SINR2 das SINR eines RS darstellt, das dem zu schätzenden Kanal im Zeitbereich am zweitnächsten liegt; F1 die Frequenzbereichskoordinate des RS darstellt, das dem zu schätzenden Kanal im Zeitbereich am nächsten liegt; F2 die Frequenzbereichskoordinate des RS darstellt, das dem zu schätzenden Kanal im Zeitbereich am zweitnächsten liegt; und F0 die Frequenzbereichskoordinate des zu schätzenden Kanals darstellt;
    wobei für B13, B14, ..., B1n und B1(n + 1) das SINR des zu schätzenden Kanals gemäß einer inversen Funktion einer Wahrscheinlichkeitsverteilungsfunktion des SINR aller referenzierten RSs bestimmt wird;
    dass für Bxy, unter der Bedingung, dass x größer ist als 1 und y größer ist als 1, die SINR-Feststellungsfunktion des zu schätzenden Kanals $y \cdot Fx1() / (x + y) + x \cdot F1y() / (x + y)$ ist, wobei Fx1() die SINR-Feststellungsfunktion von Region Bx1 darstellt und F1y() die SINR-Feststellungsfunktion von Region B1y darstellt; und für die Region mit x nicht kleiner als 2 und y nicht kleiner als 2, Bestimmen des SINR des zu schätzenden Kanals gemäß einer inversen Funktion einer Wahrscheinlichkeitsverteilungsfunktion des SINR aller referenzierten RSs;
    oder die Bestimmungseinheit (42) des Weiteren dafür konfiguriert ist zu bestimmen:

    dass für B11 das SINR des zu schätzenden Kanals gleich dem des referenzierten RS ist;
    dass für B21 das SINR des zu schätzenden Kanals SINR1 + [(SINR1-SINR2) / (T1-T2)](T0-T1) ist, wobei SINR1 das SINR eines RS darstellt, das dem zu schätzenden Kanal im Zeitbereich am nächsten liegt; SINR2 das SINR eines RS darstellt, das dem zu schätzenden Kanal im Zeitbereich am zweitnächsten liegt; T1 die Zeitbereichskoordinate des RS darstellt, das dem zu schätzenden Kanal im Zeitbereich am nächsten liegt; T2 die Zeitbereichskoordinate des RS darstellt, das dem zu schätzenden Kanal im Zeitbereich am zweitnächsten liegt; und T0 die Zeitbereichskoordinate des zu schätzenden Kanals darstellt;
    wobei für B31, B41, ..., Bm1 und B(m + 1)1 das SINR des zu schätzenden Kanals gemäß einer inversen Funktion einer Wahrscheinlichkeitsverteilungsfunktion des SINR aller referenzierten RSs bestimmt wird;
    dass für B12 das SINR des zu schätzenden Kanals SINR1 + [(SINR1-SINR2) / (F1-F2)](F0-F1) ist, wobei SINR1 das SINR eines RS darstellt, das dem zu schätzenden Kanal im Zeitbereich am nächsten liegt; SINR2 das SINR eines RS darstellt, das dem zu schätzenden Kanal im Zeitbereich am zweitnächsten liegt; F1 die Frequenzbereichskoordinate des RS darstellt, das dem zu schätzenden Kanal im Zeitbereich am nächsten liegt; F2 die Frequenzbereichskoordinate des RS darstellt, das dem zu schätzenden Kanal im Zeitbereich am zweitnächsten liegt; und F0 die Frequenzbereichskoordinate des zu schätzenden Kanals darstellt;
    wobei für B13, B14, ..., Bn1 und B1(n + 1) das SINR des zu schätzenden Kanals gemäß einer inversen Funktion einer Wahrscheinlichkeitsverteilungsfunktion des SINR aller referenzierten RSs bestimmt wird; und
    dass für Bxy, unter der Bedingung, dass x größer ist als 1 und y größer ist als 1, die SINR-Feststellungsfunktion des zu schätzenden Kanals $y \cdot Fx1() / (x + y) + x \cdot F1y() / (x + y)$ ist, wobei Fx1() die SINR-Feststellungsfunktion von Region Bx1 darstellt und F1y()die SINR-Feststellungsfunktion von Region B1y darstellt.

**11.** Vorrichtung nach Anspruch 10, wobei die Bestimmungseinheit (42) des Weiteren dafür konfiguriert ist zu bestimmen, dass:

für B21 das SINR des zu schätzenden Kanals SINR1 + [(SINR1-SINR2) / (T1$^2$-T2$^2$)](T0$^2$-T1$^2$) ist oder

$$SINR1+[(SINR1-SINR2)/\sqrt{T1^2-T2^2}]\times\sqrt{T0^2-T1^2}$$ ist, wobei SINR1 das SINR eines RS darstellt, das dem zu schätzenden Kanal im Zeitbereich am nächsten liegt; SINR2 das SINR eines RS darstellt, das dem zu schätzenden Kanal im Zeitbereich am zweitnächsten liegt; T1 die Zeitbereichskoordinate des RS darstellt, das dem zu schätzenden Kanal im Zeitbereich am nächsten liegt; T2 die Zeitbereichskoordinate des RS darstellt, das dem zu schätzenden Kanal im Zeitbereich am zweitnächsten liegt; und T0 die Zeitbereichskoordinate des zu schätzenden Kanals darstellt; wobei T0>T1>T2;

für B12 das SINR des zu schätzenden Kanals SINR1 + [(SINR1-SINR2) / (F1$^2$-F2$^2$)](F0$^2$-F1$^2$) ist oder

$$SINR1+[(SINR1-SINR2)/\sqrt{F1^2-F2^2}]\sqrt{F0^2-F1^2}$$ ist, wobei SINR1 das SINR eines RS darstellt, das dem zu schätzenden Kanal im Zeitbereich am nächsten liegt; SINR2 das SINR eines RS darstellt, das dem zu schätzenden Kanal im Zeitbereich am zweitnächsten liegt; F1 die Frequenzbereichskoordinate des RS darstellt, das dem zu schätzenden Kanal im Zeitbereich am nächsten liegt; F2 die Frequenzbereichskoordinate des RS darstellt, das dem zu schätzenden Kanal im Zeitbereich am zweitnächsten liegt; und F0 die Frequenzbereichskoordinate des zu schätzenden Kanals darstellt; wobei F0>F1>F2.

**12.** Vorrichtung nach einem der Ansprüche 9 bis 11, wobei m 1, 2, 3 oder 4 ist und wobei n 1, 2 oder 3 ist.

## Revendications

**1.** Procédé de prévision de rapport de signal sur interférence plus bruit, SINR, comprenant : le réglage d'un seuil dans le domaine de temps et d'un seuil dans le domaine de fréquence, la division d'un espace de distance temps-fréquence en différentes régions en fonction du seuil réglé dans le domaine de temps et du seuil réglé dans le domaine de fréquence, et le réglage d'une manière de détermination de SINR pour chaque région de temps-fréquence (S101) ;
le procédé comprenant en outre :

le calcul d'une différence dans le domaine de temps et d'une différence dans le domaine de fréquence entre un canal à estimer et un signal de référence, RS, référencé, dans lequel le RS est préalablement transmis au plus près du canal à estimer dans le domaine de temps ;
la détermination d'une région de temps-fréquence à laquelle appartiennent la différence dans le domaine de temps et la différence dans le domaine de fréquence ; et
la détermination du SINR du canal à estimer en fonction de la manière de détermination de SINR correspondant à la région de temps-fréquence à laquelle appartiennent la différence dans le domaine de temps et la différence dans le domaine de fréquence (S102).

**2.** Procédé selon la revendication 1, dans lequel l'étape du calcul d'une différence dans le domaine de temps et d'une différence dans le domaine de fréquence entre un canal à estimer et un RS référencé comprend :

lorsque les deux régions de temps-fréquence dans lesquelles se trouvent le canal à estimer et le RS référencé sont une unité de temps-fréquence préréglée, le calcul de la différence dans le domaine de temps et de la différence dans le domaine de fréquence en fonction d'une coordonnée de temps-fréquence du canal à estimer et/ou du RS référencé ;
lorsque la région de temps-fréquence dans laquelle se trouve le canal à estimer et/ou la région de temps-fréquence dans laquelle se trouve le RS référencé sont supérieures à une unité de temps-fréquence préréglée, le calcul d'une valeur moyenne d'une coordonnée dans le domaine de temps et d'une coordonnée dans le domaine de fréquence du canal à estimer et/ou du RS référencé en fonction de l'unité de temps-fréquence, l'établissement de la valeur de coordonnée moyenne en tant que la coordonnée du canal à estimer et/ou du RS référencé et le calcul de la différence dans le domaine de temps et de la différence dans le domaine de fréquence en fonction de la coordonnée du canal à estimer et/ou du RS référencé.

**3.** Procédé selon la revendication 1, dans lequel l'étape de la division d'un espace de distance de temps-fréquence en différentes régions en fonction du seuil réglé dans le domaine de temps et du seuil réglé dans le domaine de fréquence comprend :

lorsque le nombre du seuil réglé dans le domaine de temps est m et le nombre du seuil réglé dans le domaine de fréquence est n, la division de l'espace de distance de temps-fréquence en (m+1)(n+1) régions, qui comprennent une région entre 0 et le premier seuil, une région entre le premier seuil et le deuxième seuil, ..., une région entre le (m-1)ième seuil et le mième seuil, une région entre le (n-1)ième seuil et le nième seuil, une région au-delà du mième seuil et du nième seuil, où m et n sont des nombres entiers supérieurs ou égaux à 0 et qui ne sont pas simultanément égaux à 0.

**4.** Procédé selon la revendication 3, dans lequel Bxy est utilisé pour représenter une région de temps-fréquence divisée, x représentant un ordre de région dans le domaine de temps et y représentant un ordre de région dans le domaine de fréquence, où x est supérieur ou égal à 1 et inférieur ou égal à (m+1), y est supérieur ou égal à 1 et inférieur ou égal à (n+1) ;

l'étape du réglage d'une manière de détermination de SINR pour chaque région de temps-fréquence comprend :

pour B11, le SINR du canal à estimer étant égal à celui du RS référencé ;

pour B21, le SINR du canal à estimer étant : SINR1+[(SINR1-SINR2)/(T1-T2)](T0-T1), où SNR1 représente le SINR d'un RS le plus proche du canal à estimer dans le domaine de temps ; SINR2 représente le SINR d'un RS le plus proche en deuxième du canal à estimer dans le domaine de temps ; T1 représente la coordonnée dans le domaine de temps du RS le plus proche du canal à estimer dans le domaine de temps ; T2 représente la coordonnée dans le domaine de temps du RS le plus proche en deuxième du canal à estimer dans le domaine de temps ; et T0 représente la coordonnée dans le domaine de temps du canal à estimer ;

pour B31, B41, ..., Bm1, et B(m+1)1, la détermination du SINR du canal à estimer selon une fonction inverse d'une fonction de répartition de probabilité du SINR de tous les RS référencés ; et

pour B12, le SINR du canal à estimer étant : SINR1+[(SINR1-SINR2)/(F1-F2)](F0-F1), où SINR1 représente le SINR d'un RS le plus proche du canal à estimer dans le domaine de temps ; SINR2 représente le SINR d'un RS le plus proche en deuxième du canal à estimer dans le domaine de temps ; F1 représente la coordonnée dans le domaine de fréquence du RS le plus proche du canal à estimer dans le domaine de temps ; F2 représente la coordonnée dans le domaine de fréquence du RS le plus proche en deuxième du canal à estimer dans le domaine de temps ; et F0 représente la coordonnée dans le domaine de fréquence du canal à estimer ;

pour B13, B14, ..., B1n et B1(n+1), la détermination du SINR du canal à estimer selon une fonction inverse d'une fonction de répartition de probabilité du SINR de tous les RS référencés ;

pour Bxy, à condition que x soit supérieur à 1 et que y soit supérieur à 1, la fonction de détermination de SINR du canal à estimer étant : y·Fx1()/(x+y)+x·F1y()/(x+y), où Fx1() représente la fonction de détermination de SINR d'une région Bx1, et F1y() représente la fonction de détermination de SINR d'une région B1y ; dans lequel, pour la région avec x supérieur ou égal à 2 et y supérieur ou égal à 2, la détermination du SINR du canal à estimer selon une fonction inverse d'une fonction de répartition de probabilité du SINR de tous les RS référencés ;

ou l'étape du réglage d'une manière de détermination de SINR pour chaque région de temps-fréquence comprend :

pour B11, le SINR du canal à estimer étant égal à celui du RS référencé ;

pour B21, le SINR du canal à estimer étant : SINR1+[(SINR1-SINR2)/(T1-T2)](T0-T1), où SNR1 représente le SINR d'un RS le plus proche du canal à estimer dans le domaine de temps ; SINR2 représente le SINR d'un RS le plus proche en deuxième du canal à estimer dans le domaine de temps ; T1 représente la coordonnée dans le domaine de temps du RS le plus proche du canal à estimer dans le domaine de temps ; T2 représente la coordonnée dans le domaine de temps du RS le plus proche en deuxième du canal à estimer dans le domaine de temps ; et T0 représente la coordonnée dans le domaine de temps du canal à estimer ;

pour B31, B41, ..., Bm1, et B(m+1)1, la détermination du SINR du canal à estimer selon une fonction inverse d'une fonction de répartition de probabilité du SINR de tous les RS référencés ;

pour B12, le SINR du canal à estimer étant : SINR1+[(SINR1-SINR2)/(F1-F2)](F0-F1), où SINR1 représente le SINR d'un RS le plus proche du canal à estimer dans le domaine de temps ; SINR2 représente le SINR d'un RS le plus proche en deuxième du canal à estimer dans le domaine de temps ; F1 représente la coordonnée dans le domaine de fréquence du RS le plus proche du canal à estimer dans le domaine de temps ; F2 représente la coordonnée dans le domaine de fréquence du RS le plus proche en deuxième du canal à estimer dans le domaine de temps ; et F0 représente la coordonnée dans le domaine de fréquence du canal à estimer ;

pour B13, B14, ..., B1n et B1(n+1), la détermination du SINR du canal à estimer selon une fonction inverse d'une fonction de répartition de probabilité du SINR de tous les RS référencés ; et

pour Bxy, à condition que x soit supérieur à 1 et que y soit supérieur à 1, la fonction de détermination de SINR du canal à estimer étant : y·Fx1()/(x+y)+x·F1y()/(x+y), où Fx1() représente la fonction de détermination de SINR d'une région Bx1, et F1y() représente la fonction de détermination de SINR d'une région B1y.

5. Procédé selon la revendication 4, dans lequel pour B21, le SINR du canal à estimer étant en outre : SINR1+[(SINR1-SINR2)/(T1$^2$-T2$^2$)](T0$^2$-T1$^2$) ou SINR1 + [(*SINR*1 - *SINR*2)/ $\sqrt{T1^2 - T2^2}$ $x\sqrt{T0^2 - T1^2}$, où SINR1 représente le SINR d'un RS le plus proche du canal à estimer dans le domaine de temps ; SINR2 représente le SINR d'un RS le plus proche en deuxième du canal à estimer dans le domaine de temps ; T1 représente la coordonnée dans le domaine de temps du RS le plus proche du canal à estimer dans le domaine de temps ; T2 représente la coordonnée dans le domaine de temps du RS le plus proche en deuxième du canal à estimer dans le domaine de temps ; et T0 représente la coordonnée dans le domaine de temps du canal à estimer ; dans lequel T0>T1>T2 ;

pour B12, le SINR du canal à estimer étant en outre : SINR1+[(SINR1-SINR2)/(F1$^2$-F2$^2$)](F0$^2$-F1$^2$) ou SINR1 + [(*SINR*1 - *SINR*2)/ $\sqrt{F1^2 - F2^2}$] $\sqrt{F0^2 - F1^2}$, où SINR1 représente le SINR d'un RS le plus proche du canal à estimer dans le domaine de temps ; SINR2 représente le SINR d'un RS le plus proche en deuxième du canal à estimer dans le domaine de temps ; F1 représente la coordonnée dans le domaine de fréquence du RS le plus proche du canal à estimer dans le domaine de temps ; F2 représente la coordonnée dans le domaine de fréquence du RS le plus proche en deuxième du canal à estimer dans le domaine de temps ; et F0 représente la coordonnée dans le domaine de temps du canal à estimer ; dans lequel F0>F1>F2.

6. Procédé selon l'une quelconque des revendications 3 à 5, dans lequel m est 1, 2, 3 ou 4, dans lequel n est 1, 2 ou 3.

7. Dispositif de prévision de rapport de signal sur interférence plus bruit, SINR, comprenant une unité de réglage (40), une unité de calcul (41) et une unité de détermination (42), dans lequel :

l'unité de réglage (40) est configurée pour effectuer le réglage d'un seuil dans le domaine de temps et d'un seuil dans le domaine de fréquence, la division d'un espace de distance temps-fréquence en différentes régions en fonction du seuil réglé dans le domaine de temps et du seuil réglé dans le domaine de fréquence, et le réglage d'une manière de détermination de SINR pour chaque région de temps-fréquence ;

l'unité de calcul (41) est configurée pour effectuer le calcul d'une différence dans le domaine de temps et d'une différence dans le domaine de fréquence entre un canal à estimer et un signal de référence, RS, référencé, dans lequel le RS est préalablement transmis au plus près du canal à estimer dans le domaine de temps ; et

l'unité de détermination (42) est configurée pour effectuer la détermination d'une région de temps-fréquence à laquelle appartiennent la différence dans le domaine de temps et la différence dans le domaine de fréquence ;

et la détermination du SINR du canal à estimer en fonction de la manière de détermination de SINR correspondant à la région de temps-fréquence à laquelle appartiennent la différence dans le domaine de temps et la différence dans le domaine de fréquence.

8. Dispositif selon la revendication 7, dans lequel l'unité de calcul (41) est en outre configurée pour effectuer :

lorsque les deux régions de temps-fréquence dans lesquelles se trouvent le canal à estimer et le RS référencé sont une unité de temps-fréquence préréglée, le calcul de la différence dans le domaine de temps et de la différence dans le domaine de fréquence en fonction d'une coordonnée de temps-fréquence du canal à estimer et/ou du RS référencé ;

lorsque la région de temps-fréquence dans laquelle se trouve le canal à estimer et/ou la région de temps-fréquence dans laquelle se trouve le RS référencé sont supérieures à une unité de temps-fréquence préréglée, le calcul d'une valeur moyenne d'une coordonnée dans le domaine de temps et d'une coordonnée dans le domaine de fréquence du canal à estimer et/ou du RS référencé en fonction de l'unité de temps-fréquence, l'établissement de la valeur de coordonnée moyenne en tant que la coordonnée du canal à estimer et/ou du RS référencé et le calcul de la différence dans le domaine de temps et de la différence dans le domaine de fréquence en fonction de la coordonnée du canal à estimer et/ou du RS référencé.

9. Dispositif selon la revendication 7, dans lequel l'unité de réglage (40) est en outre configurée pour effectuer : lorsque le nombre du seuil réglé dans le domaine de temps est m et le nombre du seuil réglé dans le domaine de fréquence est n, la division de l'espace de distance de temps-fréquence en (m+1)(n+1) régions, qui comprennent une région entre 0 et le premier seuil, une région entre le premier seuil et le deuxième seuil, ..., une région entre le (m-1)ième seuil et le mième seuil, une région entre le (n-1)ième seuil et le nième seuil, une région au-delà du mième seuil et du nième seuil, où m et n sont des nombres entiers supérieurs ou égaux à 0 et qui ne sont pas simultanément égaux à 0.

10. Dispositif selon la revendication 9, dans lequel Bxy est utilisé pour représenter une région de temps-fréquence divisée, x représentant un ordre de région dans le domaine de temps et y représentant un ordre de région dans le domaine de fréquence, où x est supérieur ou égal à 1 et inférieur ou égal à (m+1), y est supérieur ou égal à 1 et inférieur ou égal à (n+1) ;
l'unité de détermination (42) est en outre configurée pour effectuer la détermination que :

pour B11, le SINR du canal à estimer est égal à celui du RS référencé ;
pour B21, le SINR du canal à estimer est : SINR1+[(SINR1-SINR2)/(T1-T2)](T0-T1), où SNR1 représente le SINR d'un RS le plus proche du canal à estimer dans le domaine de temps ; SINR2 représente le SINR d'un RS le plus proche en deuxième du canal à estimer dans le domaine de temps ; T1 représente la coordonnée dans le domaine de temps du RS le plus proche du canal à estimer dans le domaine de temps ; T2 représente la coordonnée dans le domaine de temps du RS le plus proche en deuxième du canal à estimer dans le domaine de temps ; et T0 représente la coordonnée dans le domaine de temps du canal à estimer ;
pour B31, B41, ..., Bm1, et B(m+1)1, le SINR du canal à estimer est déterminé selon une fonction inverse d'une fonction de répartition de probabilité du SINR de tous les RS référencés ; et
pour B12, le SINR du canal à estimer étant : SINR1+[(SINR1-SINR2)/(F1-F2)](F0-F1), où SINR1 représente le SINR d'un RS le plus proche du canal à estimer dans le domaine de temps ; SINR2 représente le SINR d'un RS le plus proche en deuxième du canal à estimer dans le domaine de temps ; F1 représente la coordonnée dans le domaine de fréquence du RS le plus proche du canal à estimer dans le domaine de temps ; F2 représente la coordonnée dans le domaine de fréquence du RS le plus proche en deuxième du canal à estimer dans le domaine de temps ; et F0 représente la coordonnée dans le domaine de fréquence du canal à estimer ;
pour B13, B14, ..., B1n et B1(n+1), la détermination du SINR du canal à estimer selon une fonction inverse d'une fonction de répartition de probabilité du SINR de tous les RS référencés ;
pour Bxy, à condition que x soit supérieur à 1 et que y soit supérieur à 1, la fonction de détermination de SINR du canal à estimer étant : y·Fx1()/(x+y)+x·F1y()/(x+y), où Fx1() représente la fonction de détermination de SINR d'une région Bx1, et F1y() représente la fonction de détermination de SINR d'une région B1y ; dans lequel, pour la région avec x supérieur ou égal à 2 et y supérieur ou égal à 2, le SINR du canal à estimer est déterminé selon une fonction inverse d'une fonction de répartition de probabilité du SINR de tous les RS référencés ;
ou l'unité de détermination (42) est en outre configurée pour effectuer la détermination que :

pour B11, le SINR du canal à estimer est égal à celui du RS référencé ;
pour B21, le SINR du canal à estimer est : SINR1+[(SINR1-SINR2)/(T1-T2)](T0-T1), où SNR1 représente le SINR d'un RS le plus proche du canal à estimer dans le domaine de temps ; SINR2 représente le SINR d'un RS le plus proche en deuxième du canal à estimer dans le domaine de temps ; T1 représente la coordonnée dans le domaine de temps du RS le plus proche du canal à estimer dans le domaine de temps ; T2 représente la coordonnée dans le domaine de temps du RS le plus proche en deuxième du canal à estimer dans le domaine de temps ; et T0 représente la coordonnée dans le domaine de temps du canal à estimer ;
pour B31, B41, ..., Bm1, et B(m+1)1, le SINR du canal à estimer est déterminé selon une fonction inverse d'une fonction de répartition de probabilité du SINR de tous les RS référencés ;
pour B12, le SINR du canal à estimer est : SINR1+[(SINR1-SINR2)/(F1-F2)](F0-F1), où SINR1 représente le SINR d'un RS le plus proche du canal à estimer dans le domaine de temps ; SINR2 représente le SINR d'un RS le plus proche en deuxième du canal à estimer dans le domaine de temps ; F1 représente la coordonnée dans le domaine de fréquence du RS le plus proche du canal à estimer dans le domaine de temps ; F2 représente la coordonnée dans le domaine de fréquence du RS le plus proche en deuxième du canal à estimer dans le domaine de temps ; et F0 représente la coordonnée dans le domaine de fréquence du canal à estimer ;
pour B13, B14, ..., B1n et B1(n+1), le SINR du canal à estimer est déterminé selon une fonction inverse d'une fonction de répartition de probabilité du SINR de tous les RS référencés ; et
pour Bxy, à condition que x soit supérieur à 1 et que y soit supérieur à 1, la fonction de détermination de SINR du canal à estimer est : y·Fx1()/(x+y)+x·F1y()/(x+y), où Fx1() représente la fonction de détermination de SINR d'une région Bx1, et F1y() représente la fonction de détermination de SINR d'une région B1y.

11. Dispositif selon la revendication 10, dans lequel l'unité de détermination (42) est en outre configurée pour effectuer la détermination que :

pour B21, le SINR du canal à estimer est : SINR1+[(SINR1-SINR2)/(T1$^2$-T2$^2$)](T0$^2$-T1$^2$) ou $SINR1 + [(SINR1 - SINR2)/ \sqrt{T1^2 - T2^2}] x\sqrt{T0^2 - T1^2}$, où SINR1 représente le SINR d'un RS le plus proche du canal à estimer dans le domaine de temps ; SINR2 représente le SINR d'un RS le plus proche en deuxième du canal à estimer dans le domaine de temps ; T1 représente la coordonnée dans le domaine de temps du RS le plus proche du canal à estimer dans le domaine de temps ; T2 représente la coordonnée dans le domaine de temps du RS le plus proche en deuxième du canal à estimer dans le domaine de temps ; et T0 représente la coordonnée dans le domaine de temps du canal à estimer ; dans lequel T0>T1>T2 ;

pour B12, le SINR du canal à estimer est : SINR1+[(SINR1-SINR2)/(F1$^2$-F2$^2$)](F0$^2$-F1$^2$) ou $SINR1 + [(SINR1 - SINR2)/ \sqrt{F1^2 - F2^2}] \sqrt{F0^2 - F1^2}$, où SINR1 représente le SINR d'un RS le plus proche du canal à estimer dans le domaine de temps ; SINR2 représente le SINR d'un RS le plus proche en deuxième du canal à estimer dans le domaine de temps ; F1 représente la coordonnée dans le domaine de fréquence du RS le plus proche du canal à estimer dans le domaine de temps ; F2 représente la coordonnée dans le domaine de fréquence du RS le plus proche en deuxième du canal à estimer dans le domaine de temps ; et F0 représente la coordonnée dans le domaine de temps du canal à estimer ; dans lequel F0>F1>F2.

12. Dispositif selon l'une quelconque des revendications 9 à 11, dans lequel m est 1, 2, 3 ou 4, dans lequel n est 1, 2 ou 3.

Fig. 1

Set a time domain threshold and/or a frequency domain threshold, divide a time-frequency distance space into different regions according to the set time domain threshold and frequency domain threshold, and set an SINR determination manner for each time-frequency region /101

Calculate a time domain difference and a frequency domain difference between a channel to be estimated and a referenced RS, determine a time-frequency region to which the time domain difference and the frequency domain difference belong, and determine the SINR of the channel to be estimated according to the SINR determination manner corresponding to the time-frequency region to which the time domain difference and the frequency domain difference belong /102

Fig. 2

Fig. 3

Fig. 4

Setting unit 40

Calculation unit 41

Determination unit 42

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20090318090 A1